# EUROPEAN PATENT APPLICATION

(11) **EP 2 157 510 A1**
(43) Date of publication of application: **24.02.2010**
(21) Application number: 08776908.9
(22) Date of filing: 27.05.2008
(51) Int. Cl.: G06F 9/48, G06F 9/50

(54) **WORKFLOW DEFINITION ALTERATION PROGRAM, WORKFLOW DEFINITION ALTERATION METHOD, AND WORKFLOW DEFINITION ALTERATION DEVICE**

(30) Priority: 11.06.2007 WO PCT/JP2007/061740
(71) Applicant: Fujitsu Limited, Kawasaki-shi, Kanagawa 211-8588 (JP)
(72) Inventor: KIKUCHI, Shinji, Kawasaki-shi Kanagawa 211-8588 (JP); TSUCHIYA, Satoshi, Kawasaki-shi Kanagawa 211-8588 (JP)
(74) Representative: Stebbing, Timothy Charles
(86) International application number: PCT/JP2008/059743
(87) International publication number: WO 2008/152910

(57) **Abstract**

A constraint violation occurring among plural workflows is eliminated before execution of the workflows. A state-transition-model generating unit generates a state transition model for execution of the workflows, by using plural process procedures and plural policies received by a receiving unit. A constraint-violation determining unit determines whether a constraint violation occurs when the workflows are executed, by using the state transition model and plural constraints received by the receiving unit. When it is determined that the constraint violation occurs, a workflow-definition altering unit alters any one or some of the process procedures, the policies, and the constraints. The state-transition-model generating unit generates a state transition model after alteration by using the process procedures and the policies applied with the alteration. The constraint-violation determining unit determines whether a constraint violation occurs by using the state transition model after the alteration and the constraints applied with the alteration. When it is determined that no constraint violation occurs, a display unit displays an alternative workflow definition on a monitor.

## Description

### TECHNICAL FIELD

The present invention relates to a workflow-definition alteration program, a workflow-definition alteration method, and a workflow-definition alteration device useful for altering a workflow definition. More particularly, the present invention relates to a workflow-definition alteration program, a workflow-definition alteration method, and a workflow-definition alteration device that enable to eliminate a constraint violation occurring among a plurality of workflows before execution of the workflows.

### BACKGROUND ART

With recent increase in scales and complexities of information systems, operation management of the systems has also become more complicated. This has made normal operations of the systems more difficult. In view of this situation, procedures and rules of the operation management are defined by workflows, and a system administrator operates the system according to the definition or causes the system itself to perform an operation managing process according to the definition, thereby reducing burdens of the operation management (see Patent Document 1 mentioned below).

Patent Document 1: Japanese Laid-open Patent Publication No. 09-044352

### DISCLOSURE OF INVENTION

### PROBLEM TO BE SOLVED BY THE INVENTION

In the operation management using the workflows, however, mutual interference among the workflows becomes a problem. Specifically, when there are plural workflows sharing the same resource and when these workflows are simultaneously executed, a resource contention occurs and this may pose problems such as delay in processing. Simulation is one of methods for solving the problems. The simulation assumes a certain scenario (input sequence) and evaluates a result of processing according to the scenario. Accordingly, a constraint violation that may occur in an unexpected scenario or a constraint violation with a small probability is often overlooked. There is another method in which a constraint violation is detected during execution of workflows, and then measures are taken to eliminate the constraint violation. In this method, the measures to eliminate the constraint violation need to be devised upon detection of the constraint violation. Therefore, burdens on the system administrator are so heavy, and even when occurrence of a constraint violation is predicted, the predicted constraint violation cannot be avoided.

The present invention has been achieved to solve the problems of the conventional technique, and an object of the present invention is to provide a workflow-definition alteration program, a workflow-definition alteration method, and a workflow-definition alteration device that enable to eliminate a constraint violation among plural workflows before execution of the workflows.

### MEANS FOR SOLVING PROBLEM

To solve the problems as described above and to achieve an object, a workflow-definition alteration program according to the present invention is for presenting a workflow definition including process procedures related to various proceedings, policies related to rules on allocation of resources to be used when the process procedures are performed, and constraints related to rules to be complied with when the process procedures are performed, and the workflow-definition alteration program causes a computer to perform: a receiving procedure of receiving the process procedures, the policies, and the constraints; a state-transition-model generating procedure of generating a state transition model for execution of workflows corresponding to the process procedures, by using the process procedures and the policies received in the receiving procedure; a determining procedure of determining whether a constraint violation occurs when the workflows are executed, by using the state transition model generated in the state-transition-model generating procedure and the constraints received in the receiving procedure; an altering procedure of altering any one or some of the process procedures, the policies, and the constraints when it is determined in the determining procedure that the constraint violation occurs; and a presenting procedure of presenting, when alteration is applied in the altering procedure, a workflow definition including the process procedures, the policies, and the constraints applied with the alteration as an alterative workflow definition.

Further, a workflow-definition alteration method according to the present invention is for presenting a workflow definition including process procedures related to various proceedings, policies related to rules on allocation of resources to be used when the process procedures are performed, and constraints related to rules to be complied with when the process procedures are performed, and the workflow-definition alteration method includes: a receiving step of receiving the process procedures, the policies, and the constraints; a state-transition-model generating step of generating a state transition model for execution of workflows corresponding to the process procedures, by using the process procedures and the policies received in the receiving step; a determining step of determining whether a constraint violation occurs when the workflows are executed, by using the state transition model generated in the state-transition-model generating step and the constraints received in the receiving step; an altering step of altering any one or some of the process procedures, the policies, and the constraints when it is determined in the determining step that the constraint violation occurs; and a presenting step of presenting, when alteration is applied in the altering step, a workflow definition including the process procedures, the policies, and the constraints applied with the alteration as an alternative workflow definition.

Still further, a workflow-definition alteration device according to the present invention is for presenting a workflow definition including process procedures related to various proceedings, policies related to rules on allocation of resources to be used when the process procedures are performed, and constraints related to rules to be complied with when the process procedures are performed, and the workflow-definition alteration device includes: a receiving unit that receives the process procedures, the policies, and the constraints; a state-transition-model generating unit that generates a state transition model for execution of workflows corresponding to the process procedures, by using the process procedures and the policies received by the receiving unit; a determining unit that determines whether a constraint violation occurs when the workflows are executed, by using the state transition model generated by the state-transition-model generating unit and the constraints received by the receiving unit; an altering unit that alters any one or some of the process procedures, the policies, and the constraints when it is determined by the determining unit that the constraint violation occurs; and a presenting unit that presents, when alteration is applied by the altering unit, a workflow definition including the process procedures, the policies, and the constraints applied with the alteration as an alterative workflow definition.

According to the above-described inventions, by using the plural process procedures and the plural policies inputted by, for example, a system administrator, the state transition model for execution of workflows corresponding to the plural process procedures can be generated. It can be determined by using the state transition model and the plural constraints inputted by the system administrator whether a constraint violation occurs during execution of the workflows. When it is determined in the determination that a constraint violation occurs, any one or some of the process procedures, the policies, and the constraints can be altered, and the workflow definition including the process procedures, policies, and constraints after the alteration can be presented to the system administrator as an alternative workflow definition.

Still further, according to the present invention, in the above-described invention, the state-transition-model generating procedure includes generating the state transition model after the alteration by using the process procedures, and the policies applied with the alteration in the altering procedure, and the determining procedure includes determining whether the constraint violation occurs by using the state transition model after the alteration generated in the state-transition-model generating procedure, and the constraints after the alteration in the altering procedure.

Thus, it can be determined by using the state transition model based on the altered process procedures and policies and the altered constraints whether a constraint violation occurs during execution of the altered workflows. When it is determined in the determination that no constraint violation occurs, the workflow definition including the process procedures, the policies, and the constraints after the alteration can be presented to the system administrator as an alternative workflow definition.

Still further, the present invention, in the above-described invention, further causes the computer to perform a variable-specifying procedure of specifying a variable having different values before and after the alteration of the state transition model, by comparing the state transition model and the state transition model after the alteration generated in the state-transition-model generating procedure.

Still further, the present invention, in the above-described invention, causes the computer to perform a notifying procedure of notifying that presentation of the alternative workflow defnition is impossible when it is determined in the determining procedure that the constraint violation occurs and the number of determinations that the constraint violation occurs reaches a predetermined value.

Still further, according to the present invention, in the above-described invention, the presenting procedure further includes presenting details of the constraint violation.

Still further, a workflow-definition alteration program according to the present invention is for presenting a workflow definition including process procedures related to various proceedings, policies related to rules on allocation of resources to be used when the process procedures are performed, and constraints related to rules to be complied with when the process procedures are performed, and the workflow-definition alteration program causes a computer to perform: a receiving procedure of receiving the process procedures, the policies, and the constraints; a state-transition-model generating procedure of generating a state transition model for execution of workflows corresponding to the process procedures, by using the process procedures and the policies received in the receiving procedure; a determining procedure of determining whether a constraint violation occurs when the workflows are executed, by using the state transition model generated in the state-transition-model generating procedure and the constraints received in the receiving procedure; and a displaying procedure of displaying, when it is determined in the determining procedure that the constraint violation occurs, a workflow screen on which the workflows and the constraint violation are represented with graphics and character strings, on a predetermined display device.

Still further, according to the present invention, in the above-described invention, the displaying procedure includes displaying a constraint-violating workflow that is determined in the determining procedure to include occurrence of a constraint violation, and a workflow including a process procedure that simultaneously uses a same resource as a process procedure included in the constraint-violating workflow.

Still further, according to the present invention, in the above-described invention, the displaying procedure includes displaying, when there is a period in which two or more process procedures included in different workflows simultaneously use a same resource, a workflow screen that is configured to enable distinction between the two or more process procedures and remaining process procedures other than the two or more process procedures, on the display device.

According to the above-described inventions, the state transition model can be generated for execution of the workflows corresponding to the plural process procedures by using the plural process procedures and the plural policies inputted by the system administrator. It can be determined whether a constraint violation occurs when the plural workflows are executed by using the state transition model and the plural constraints inputted by the system administrator. When it is determined in the determination that a constraint violation occurs, the constraint-violating workflow and the resource-sharing workflow can be specified, and the workflow screen can be displayed. As a result, it is possible to easily recognize a workflow in which the constraint violation occurs and to easily recognize a cause of the constraint violation.

Still further, the present invention, in the above-described invention, further causes the computer to perform an alteration-operation receiving procedure of receiving an alteration operation for the workflow definition on the workflow screen, and the state-transition-model generating procedure includes generating the state transition model by using the workflow definition applied with alteration received in the alteration-operation receiving procedure.

According to the present invention, for example, alteration operation for the workflow definition can be received on the workflow screen, and it can be determined whether a constraint violation occurs when the altered workflows are executed by using the state transition model based on the altered workflow definition and the altered constraints. When it is determined in the determination that a constraint violation occurs, the constraint-violating workflow and the source-sharing workflow can be specified, and the workflow screen can be displayed. As a result, the system administrator can easily alter the workflow definition, and easily check whether the altered workflow definition violates the constraints.

### EFFECT OF THE INVENTION

According to the present invention, by using the plural process procedures and the plural policies received, the state transition model for execution of workflows corresponding to the plural process procedures can be generated. It can be determined by using the state transition model and the plural received constraints whether a constraint violation occurs during execution of the workflows. When it is determined in the determination that a constraint violation occurs, any one or some of the process procedures, the policies, and the constraints can be altered, and the workflow definition including the process procedures, policies, and constraints after the alteration can be presented to the system administrator as an alternative workflow definition.

According to the present invention, it can be determined by using the state transition model based on the altered process procedures and policies and the altered constraints whether a constraint violation occurs during execution of the altered workflows. When it is determined in the determination that no constraint violation occurs, the workflow definition including the process procedures, the policies, and the constraints after the alteration can be presented to the system administrator as an alternative workflow definition.

According to the present invention, a workflow in which the constraint violation occurs can be easily identified, and a cause of the constraint violation can be easily recognized.

According to the present invention, the system administrator can easily alter the workflow definition, and can easily confirm whether the altered workflow definition violates the constraints.

That is, the present invention has an effect that a constraint violation among plural workflows can be eliminated before the workflows are executed.

### BRIEF DESCRIPTION OF DRAWINGS

FIG. 1 is a functional configuration diagram of a workflow-definition alteration device.
FIG. 2 depicts a process procedure of a workflow A.
FIG. 3 depicts the process procedure of the workflow A.
FIG. 4 depicts a process procedure of a workflow B.
FIG. 5 depicts the process procedure of the workflow B.
FIG. 6 depicts an automaton generated by transforming the workflow A depicted in FIG. 2.
FIG. 7 depicts an automaton generated by transforming the workflow B depicted in FIG. 4.
FIG. 8 depicts two automata for generating a product automaton.
FIG. 9 depicts the product automaton generated by using the two automata depicted in FIG. 8.
FIG. 10 depicts a part of the product automaton with a location L11 in which a resource contention occurs at its center.
FIG. 11 is a schematic diagram for explaining alteration applied when resource allocation in the location L11 depicted in FIG. 10 is of a non-preemptive type.
FIG. 12 is a schematic diagram for explaining alteration applied when resource allocation in the location L11 depicted in FIG. 10 is of a preemptive type.
FIG. 13 is a schematic diagram for explaining alteration applied when resource allocation in the location L11 depicted in FIG. 10 is of a concurrent type.
FIG. 14 is an example of alternative workflow data for displaying an alternative workflow.
FIG. 15 is a flowchart of a process procedure performed by the workflow-definition alteration device.
FIG. 16 is a functional configuration diagram of a computer that executes a workflow-definition alteration program.
FIG. 17 is a functional configuration diagram of a workflow-definition alteration device according to a second embodiment of the present invention.
FIG. 18-1 is an example of display of two process procedures not using the same resource.
FIG. 18-2 is an example of display of two process procedures simultaneously using the same resource.
FIG. 18-3 is an example of display of two process procedures simultaneously using the same resource.
FIG. 18-4 is an example of display of two process procedures simultaneously using the same resource.
FIG. 19-1 is an example of display of a workflow that violates a constraint on a workflow completion time.
FIG. 19-2 is an example of display of workflows that violate a constraint on a processing order.
FIG. 19-3 is an example of display of workflows that violate a constraint on a resource contention.
FIG. 20 is an example of a workflow screen.
FIG. 21-1 is an example of an alteration operation for a workflow completion time.
FIG. 21-2 is an example of an alteration operation for allocation types.
FIG. 21-3 is an example of a resource alteration operation.
FIG. 21-4 is an example of a workflow screen displayed upon receipt of an alteration operation.
FIG. 22 is a flowchart of a process procedure performed by the workflow-definition alteration device according to the second embodiment.

### EXPLANATIONS OF LETTERS OR NUMERALS

- 10: Workflow-definition alteration device
- 11: Controller
- 12: Storage unit
- 20: Workflow-definition alteration device
- 21: Controller
- 111: Receiving unit
- 112: State-transition-model generating unit
- 113: Constraint-violation determining unit
- 114: Workflow-definition altering unit
- 115: Display unit
- 116: Altered-variable specifying unit
- 212: State-transition-model generating unit
- 213: Constraint-violation determining unit
- 215: Display unit
- 216: Alteration-operation receiving unit
- 1000: Computer
- 1010: CPU
- 1020: Input device
- 1030: Monitor
- 1040: Medium reading device
- 1050: Communicating device
- 1060: RAM
- 1061: Workflow-definition altering process
- 1070: Hard disk drive
- 1071: Workflow-definition alteration program
- 1072: Workflow-definition altering data
- 1080: Bus

### BEST MODE(S) FOR CARRYING OUT THE INVENTION

Exemplary embodiments of a workflow-definition alteration program, a workflow-definition alteration method, and a workflow-definition alteration device according to the present invention will be explained below in detail with reference to the accompanying drawings.

### First embodiment

A workflow-definition alteration device according to a first embodiment of the present invention is characterized in generating a state transition model for execution of plural workflows, by using a workflow definition inputted by a system administrator, determining whether a constraint violation occurs in each of the workflows by using the state transition model, and, when the constraint violation occurs, presenting the system administrator with the workflow definition from which the constraint violation is eliminated by altering the workflow definition. Accordingly, the constraint violation among the plural workflows can be eliminated before the execution of the workflows.

The workflow definition includes process procedures, policies, and constraints. The definition of the process procedures is associated with various proceedings in workflows. The definition of the policies is associated with rules on resource allocation applied when the process procedures are performed. The definition of the constraints is associated with rules to be complied with when the process procedures are performed.

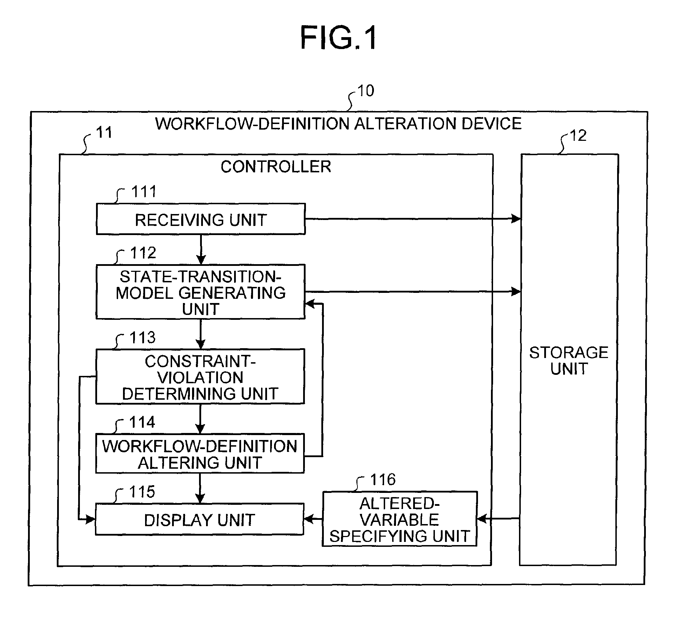

Functions of the workflow-definition alteration device are explained in detail with reference to FIG. 1. FIG. 1 is a functional configuration diagram of a workflow-definition alteration device. As depicted in FIG. 1, a workflow-definition alteration device 10 includes a controller 11 that controls the whole workflow-definition alteration device 10, and a storage unit 12 that stores therein applications and data to be used for processing in the controller 11.

The controller 11 includes a receiving unit 111, a state-transition-model generating unit 112, a constraint-violation determining unit 113, a workflow-definition altering unit 114, a display unit 115, and an altered-variable specifying unit 116.

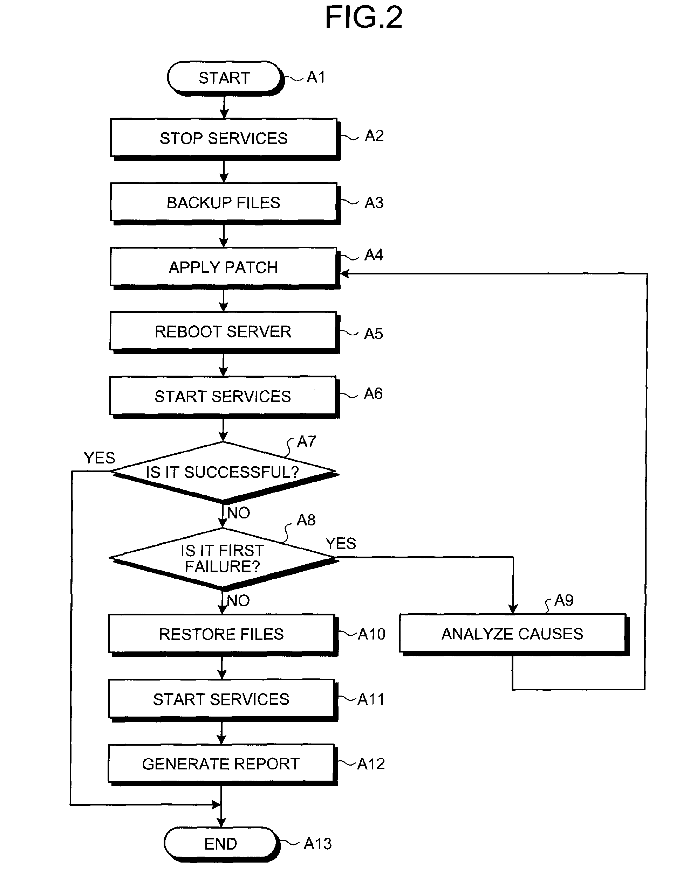

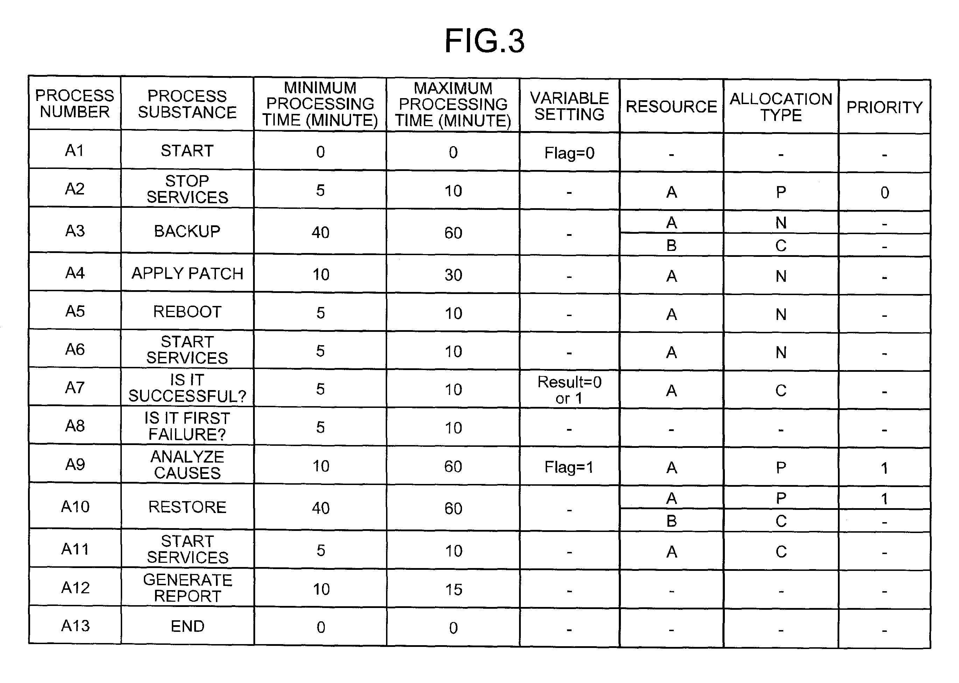

The receiving unit 111 receives a workflow definition including plural process procedures, plural policies, and plural constraints, generated by a system administrator. The process procedures included in the workflow definition are explained with reference to FIGS. 2 to 5. FIGS. 2 and 3 depict a process procedure of a workflow A. The workflow A is executed when a patch is applied to a server A. Among items depicted in FIG. 3, a process number, a process substance, a minimum processing time, a maximum processing time, and variable setting are included in the process procedure.

The process procedure of the workflow A depicted in FIGS. 2 and 3 is specifically explained. A process proceeding with the process number "A1" is performed first when the workflow A is executed. The substance of the process is "Start" indicating that the workflow A is started. Both of the minimum and maximum processing times thereof are 0 minute (that is, the processing time is 0 minute). In this process proceeding, "0" is assigned to an initial value of a variable "Flag". A process proceeding with the process number "A2" is performed secondly when the workflow A is executed. The substance of the process is "Stop services" indicating that services provided by the server A are stopped. The minimum processing time thereof is 5 minutes and the maximum processing time is 10 minutes (that is, the processing time is 5 to 10 minutes).

A process proceeding with a process number "A3" is performed third when the workflow A is executed. The substance of the process is "Backup" indicating that files in the server A are backed up to a server B. The minimum processing time thereof is 40 minutes and the maximum processing time is 60 minutes (that is, the processing time is 40 to 60 minutes). A process proceeding with a process number "A4" is performed fourth when the workflow A is executed. The substance of the process is "Apply patch" indicating that a patch is applied to the server A. The minimum processing time thereof is 10 minutes and the maximum processing time is 30 minutes (that is, the processing time is 10 to 30 minutes).

A process proceeding with a process number "A5" is performed fifth when the workflow A is executed. The substance of the process is "Reboot" indicating that the server A is rebooted. The minimum processing time thereof is 5 minutes and the maximum processing time is 10 minutes (that is, the processing time is 5 to 10 minutes). A process proceeding with a process number "A6" is performed sixth when the workflow A is executed. The substance of the process is "Start services" indicating that the services provided by the server A are started. The minimum processing time thereof is 5 minutes and the maximum processing time is 10 minutes (that is, the processing time is 5 to 10 minutes).

A process proceeding with a process number "A7" is performed seventh when the workflow A is executed. The substance of the process is "Is it successful?" indicating that the process branches according to whether the services in the server A have been successfully started. The minimum processing time thereof is 5 minutes and the maximum processing time is 10 minutes (that is, the processing time is 5 to 10 minutes). Based on a result of the determination in this process proceeding, "0" or "1" is assigned to a variable "Result".

A process proceeding with a process number "A8" is performed when the services fail to start (NO) in the process proceeding with the process number "A7" during the execution of the workflow A. The substance of the process is "Is it first failure?" indicating that the process branches according to whether a failure of the service start is first one. The minimum processing time thereof is 5 minutes and the maximum processing time is 10 minutes (that is, the processing time is 5 to 10 minutes).

A process proceeding with a process number "A9" is performed when the failure of the service start in the process proceeding with the process number "A8" is the first one (YES) during the execution of the workflow A. The substance of the process is "Analyze causes" indicating that causes of the failure of the service start are analyzed. The minimum processing time thereof is 10 minutes and the maximum processing time is 60 minutes (that is, the processing time is 10 to 60 minutes). In this process proceeding, "1" is assigned to a variable "Flag".

A process proceeding with a process number "A10" is performed when the failure of the service start in the process proceeding with the process number "A8" is the second one (NO) during the execution of the workflow A. The substance of the process is "Restore" indicating that the files are restored from the server B to the server A. The minimum processing time thereof is 40 minutes and the maximum processing time is 60 minutes (that is, the processing time is 40 to 60 minutes).

A process proceeding with a process number "A11" is performed after the process proceeding with the process number "A10" during the execution of the workflow A. The substance of the process is "Start services" indicating the services provided by the server A are started. The minimum processing time thereof is 5 minutes and the maximum processing time is 10 minutes (that is, the processing time is 5 to 10 minutes). A process proceeding with a process number "A12" is performed after the process proceeding with the process number "A11" during the execution of the workflow A. The substance of the process is "Generate report" indicating that a report is generated. The minimum processing time thereof is 10 minutes and the maximum processing time is 15 minutes (that is, the processing time is 10 to 15 minutes). A process proceeding with a process number "A13" is performed last during the execution of the workflow A. The substance of the process is "End" indicating that the workflow A ends. Both of the minimum and maximum processing times thereof are 0 minute (that is, the processing time is 0 minute).

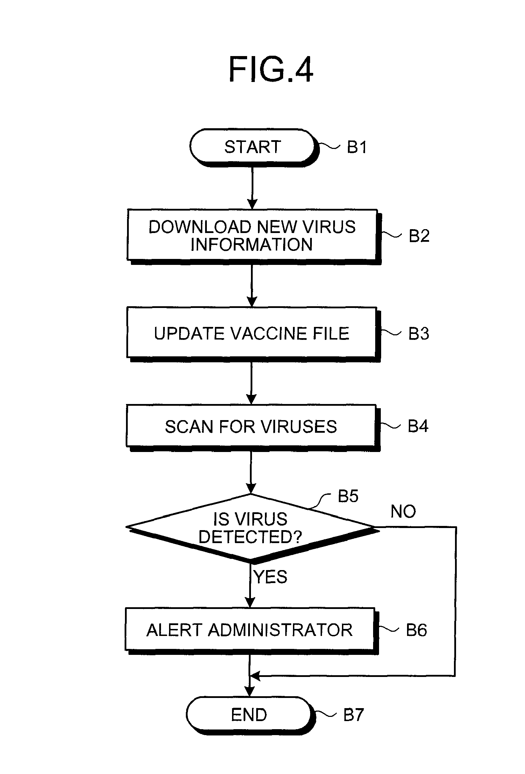

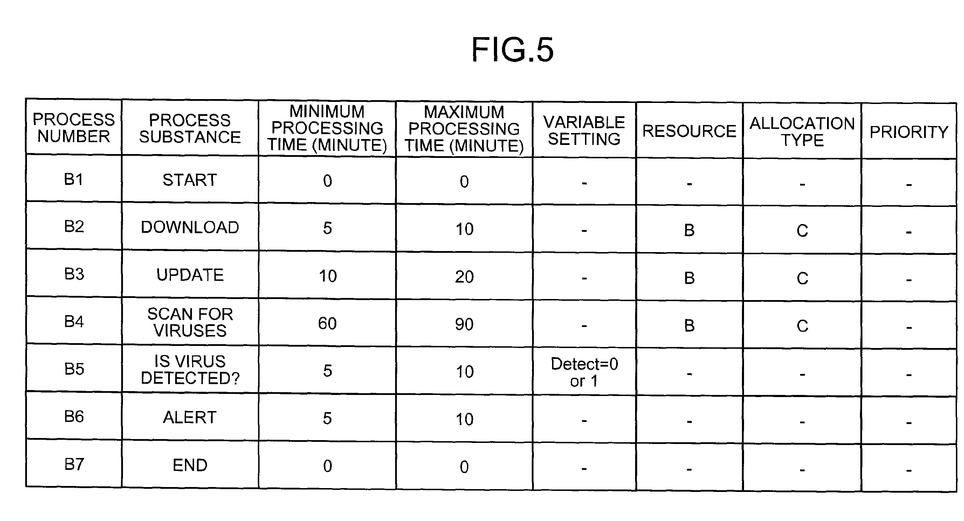

FIGS. 4 and 5 depict a process procedure of a workflow B. The workflow B is executed when the server B is scanned for viruses. Among items depicted in FIG. 5, a process number, a process substance, a minimum processing time, a maximum processing time, and variable setting are included in the process procedure.

The process procedure of the workflow B depicted in FIGS. 4 and 5 is specifically explained. A process proceeding with a process number "B1" is performed first when the workflow B is executed. The substance of the process is "Start" indicating that the workflow B is started. Both of the minimum and maximum processing times thereof are 0 minute (that is, the processing time is 0 minute). A process proceeding with a process number "B2" is performed secondly when the workflow B is executed. The substance of the process is "Download" indicating that new virus information is downloaded. The minimum processing time thereof is 5 minutes and the maximum processing time is 10 minutes (that is, the processing time is 5 to 10 minutes).

A process proceeding with a process number "B3" is performed third when the workflow B is executed. The substance of the process is "Update" indicating that a vaccine file is updated. The minimum processing time thereof is 10 minutes and the maximum processing time is 20 minutes (that is, the processing time is 10 to 20 minutes). A process proceeding with a process number "B4" is performed fourth when the workflow B is executed. The substance of the process is "Scan for viruses" indicating that viruses are scanned for. The minimum processing time thereof is 60 minutes and the maximum processing time is 90 minutes (that is, the processing time is 60 to 90 minutes).

A process proceeding with a process number "B5" is performed fifth when the workflow B is executed. The substance of the process is "Is virus detected?" indicating that the process branches according to whether a virus is detected. The minimum processing time thereof is 5 minutes and the maximum processing time is 10 minutes (that is, the processing time is 5 to 10 minutes). Based on a result of this process proceeding, "0" or "1" is assigned to a variable "Detect".

A process proceeding with a process number "B6" is performed when a virus is detected (YES) in the process proceeding with the process number "B5" during the execution of the workflow B. The substance of the process is "Alert" indicating that the administrator is alerted. The minimum processing time thereof is 5 minutes and the maximum processing time is 10 minutes (that is, the processing time is 5 to 10 minutes). A process proceeding with a process number "B7" is performed last during the execution of the workflow B. The substance of the process is "End" indicating that the workflow B ends. Both of the minimum and maximum processing times thereof are 0 minute (that is, the processing time is 0 minute).

Policies included in the workflow definition are explained with reference to FIGS. 3 and 5. Among items depicted in FIGS. 3 and 5, the process numbers, resources, allocation types, and priorities are included in the policies. The allocation here includes non-preemptive, preemptive, and concurrent types, for example.

In the non-preemptive type, when plural process proceedings use the same resource, after a process proceeding performed first is completely finished, the subsequent process proceeding is performed. The non-preemptive allocation is applied when simultaneous writing into a file is to be inhibited, for example.

In the preemptive type, when plural process proceedings use the same resource, priorities of the process proceedings are compared, then a process proceeding with a higher priority is performed first, and a process proceeding with a lower priority is performed after completion of the previous process proceeding. Therefore, when a process proceeding using the resource earlier has a higher priority than a process proceeding using the resource later, the same operation as in the non-preemptive allocation is performed. The preemptive allocation is applied when an emergent operation is to be interposed, for example.

In the concurrent type, plural process proceedings are allowed to simultaneously use the same resource. Therefore, the processing time becomes longer than in cases where the resource is used with respect to each process proceeding. The concurrent allocation is applied when plural processes are to be executed by a central processing unit (CPU) in a server, for example.

The policies of the workflow A depicted in FIG. 3 are explained specifically. The process proceeding with the process number "A2" is performed by using the "server A" as a resource and applying the "preemptive" type of allocation when a resource contention occurs. The process proceeding is assigned with a priority "0" indicating that the priority is low when a contention in uses of the "server A" occurs. The process proceeding with the process number "A3" is performed by using the "server A" and "server B" as resources and applying the "non-preemptive" and "concurrent" types of allocation, respectively, when a resource contention occurs. The process proceedings with the process numbers "A4" to "A6" are performed by using the "server A" as a resource and applying the "non-preemptive" type of allocation when a resource contention occurs. The process proceedings with the process numbers "A7" and "A11" are performed by using the "server A" as a resource and applying the "concurrent" type of allocation when a resource contention occurs.

The process proceeding with the process number "A9" is performed by using the "server A" as a resource and applying the "preemptive" type of allocation when a resource contention occurs. The process proceeding is assigned with a priority "1" indicating that the priority is higher when a contention in uses of the "server A" occurs. The process proceeding with the process number "A10" is performed by using the "server A" and "server B" as resources and applying the "preemptive" and "concurrent" types of allocation, respectively, when a resource contention occurs. The process proceeding is assigned with a priority "1" indicating that the priority is higher when a contention in uses of the "server A" occurs.

The policies of the workflow B depicted in FIG. 5 are explained specifically. The process proceedings with the process numbers "B2" to "B4" are performed by using the "server B" as a resource and applying the "concurrent" type of allocation when a resource contention occurs.

An exemplary constraint included in the workflow definition is that "When the workflow A is started at a 0th minute and the workflow B is started at a 200th minute, the workflows A and B have been finished at a 400th minute." This constraint can be expressed by a logical formula.

The state-transition-model generating unit 112 depicted in FIG. 1 generates a state transition model at a time when the plural workflows are executed by using the plural process procedures and the plural policies received by the receiving unit 111. Specifically, the state-transition-model generating unit 112 converts the workflows into corresponding automata, generates a product automaton by using the resultant automata, and altering the generated product automaton according to a state of a resource contention. This enables to generate the state transition model at a time when the workflows causing the resource contention are executed. The state-transition-model generating unit 112 further generates a state transition model at a time when plural altered workflows are executed by using the process procedures and the policies altered by the workflow-definition altering unit 114 (explained later).

In the first embodiment, Hybrid automata are adopted as the state transition models. The Hybrid automata are obtained by generalizing timed automata in which a time concept is introduced (see R. Alur and D.L. Dill, "A theory of timed automata", Theoretical Computer Sci., vol. 126, pp. 183 to 235, 1994). The Hybrid automata enable a system handling an analogous continuous quantity to be represented by a finite-state transition model. The timed automata enable to represent passage of time in a system by introducing a variable class "clock" that has characteristics of continuing to increase uniformly with an elapsed time. In contrast, the Hybrid automata enable to define a variation per unit time of each variable. With the Hybrid automata, a variable that decreases with time passage or plural variables having different increase amounts in the same time period can be represented.

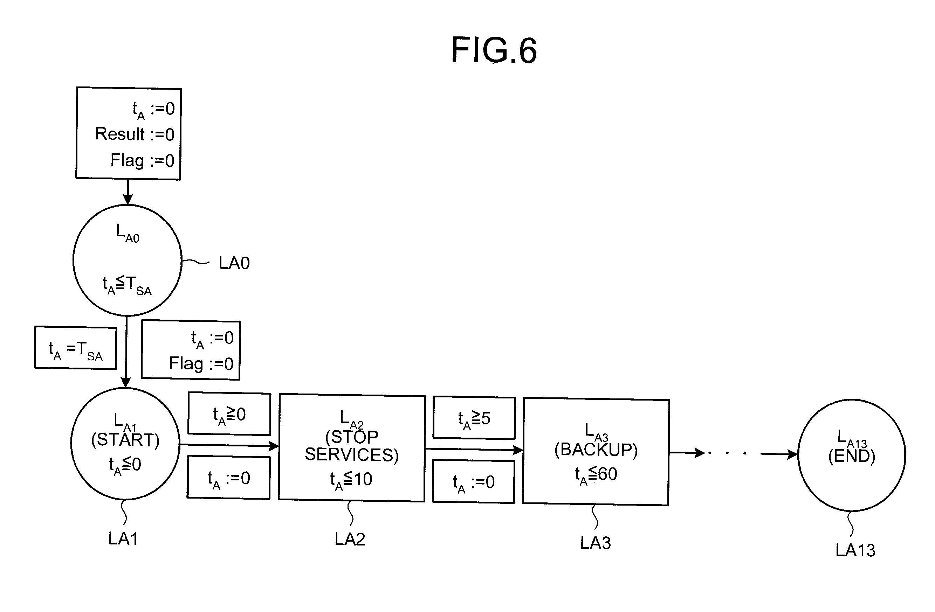

A process of generating a state transition model is explained with reference to FIGS. 6 to 13. A process of generating a state transition model during execution of two workflows (the workflows A and B) is explained below.

FIG. 6 depicts an automaton generated by transforming the workflow A depicted in FIG. 2. Locations LA1, LA2, LA3, and LA13 depicted in FIG. 6 are defined corresponding to the process proceedings A1, A2, A3, and A13 depicted in FIG. 2, respectively. The locations are connected according to a definition of order relations between the process proceedings included in the workflow definition. For the convenience of explanations, only some of the process proceedings depicted in FIG. 2 are explained. A location LA0 is an initial location in which an initial value of each variable is defined. In the location LA0, initial values of a variable t_{A}, the variable Result, and the variable Flag are set to 0. The variable t_{A} is a timer variable, which is a count of a processing time in each location.

"t_{A}≤T_{SA}" described in the location LA0 indicates that the process remains in the location LA0 until the timer variable T_{A} reaches a predetermined start time T_{SA} from 0. "t_{A}=T_{SA}" described between the locations LA0 and LA1 indicates that a transition from the location LA0 to the location LA1 occurs when the timer variable t_{A} reaches the start time T_{SA}. "t_{A}:=0, Flag:=0" described between the locations LA0 and LA1 indicates that the timer variable t_{A} and the variable Flag are set to 0 when the transition from the location LA0 to the location LA1 occurs.

"t_{A}≤0", "t_{A}≤10", and "t_{A}≤60" described in the locations LA1, LA2, and LA3, respectively, indicate the maximum processing times in which the process can remain in the corresponding location. These maximum processing times correspond to the maximum processing times depicted in FIG. 3. Therefore, it implies that the process cannot remain in the location LA1 for more than 0 minute, in the location LA2 for more than 10 minutes, and in the location LA3 for more than 60 minutes.

"t_{A}≥0" and "t_{A}≥5" described between the locations LA1 and LA2 and between the locations LA2 and LA3, respectively, indicate the minimum processing times in which the process can remain in the corresponding transition source locations. These minimum processing times correspond to the minimum processing times depicted in FIG. 3. Therefore, it implies that a transition from the location LA1 to the location LA2 cannot occur before 0 minute elapses, and a transition from the location LA2 to the location LA3 cannot occur before 5 minutes elapse.

"t_{A}:=O" described between the locations LA1 and LA2 and between the locations LA2 and LA3 indicates that the timer variable t_{A} is set to 0 when a transition between the locations occurs.

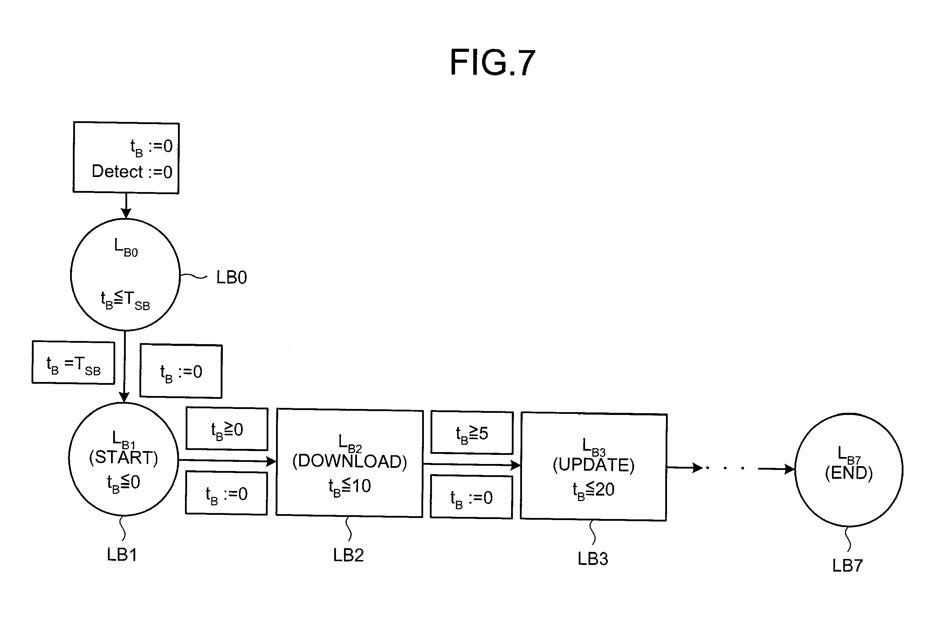

FIG. 7 depicts an automaton generated by transforming the workflow B depicted in FIG. 4. Locations LB1, LB2, LB3, and LB7 depicted in FIG. 7 are defined corresponding to the process proceedings B1, B2, B3, and B7 depicted in FIG. 4, respectively. The locations are connected according to a definition of order relations between process proceedings included in the workflow definition. For the convenience of explanations, only some of the process proceedings depicted in FIG. 4 are explained. A location LB0 is an initial location in which an initial value of each variable is defined. In the location LB0, initial values of a variable t_{B} and the variable Detect are set to 0. The variable t_{B} is a timer variable, which is a count of the processing time in each location.

"t_{B}≤T_{SB}" described in the location LB0 indicates that the process remains in the location LB0 until the timer variable t_{B} reaches a predetermined start time T_{SB} from 0. "t_{B}=T_{SB}" described between the locations LB0 and LB1 indicates that a transition from the location LB0 to the location LB1 occurs when the timer variable t_{B} reaches the start time T_{SB}. "t_{B}:=O" described between the locations LB0 and LB1 indicates that the timer variable t_{B} is set to 0 when a transition from the location LB0 to the location LB1 occurs.

"t_{B}≤0", "t_{B}≤10", and "t_{B}≤20" described in the locations LB1, LB2, and LB3, respectively, indicate the maximum processing time in which the process can remain in the corresponding location. These maximum processing times correspond to the maximum processing times depicted in FIG. 5. Therefore, it implies that the process cannot remain in the location LB1 for more than 0 minute, in the location LB2 for more than 10 minutes, and in the location LB3 for more than 20 minutes.

"t_{B}≥0" and "t_{B}≥5" described between the locations LB1 and LB2 and between the locations LB2 and LB3, respectively, indicate the minimum processing times in which the process can remain in the corresponding transition source locations. These minimum processing times correspond to the minimum processing times depicted in FIG. 5. Therefore, it implies that a transition from the location LB1 to the location LB2 cannot occur before 0 minute elapses, and a transition from the location LB2 to the location LB3 cannot occur before 5 minutes elapse.

"t_{B}:=0" described between the locations LB1 and LB2 and between the locations LB2 and LB3 indicate that the timer variable t_{B} is set to 0 when a transition between the locations occurs.

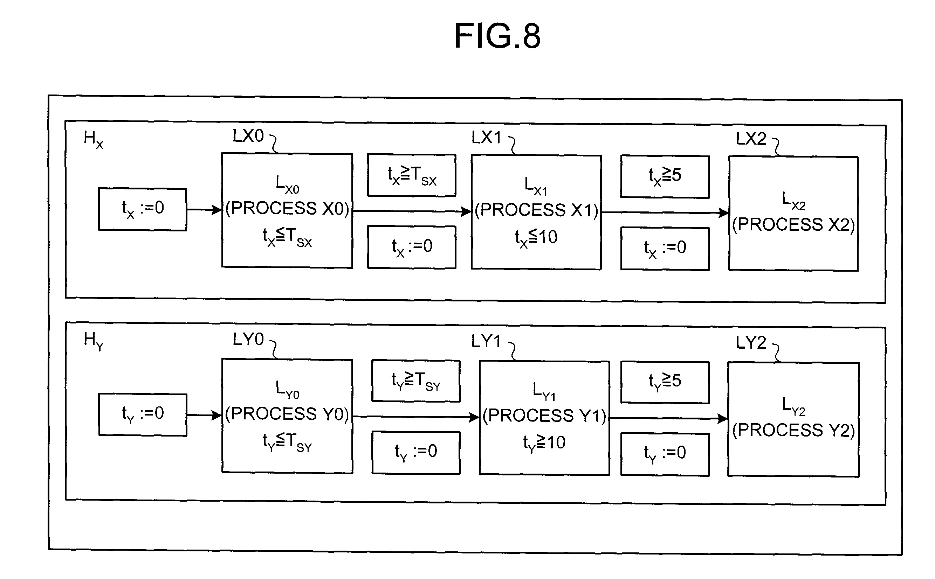

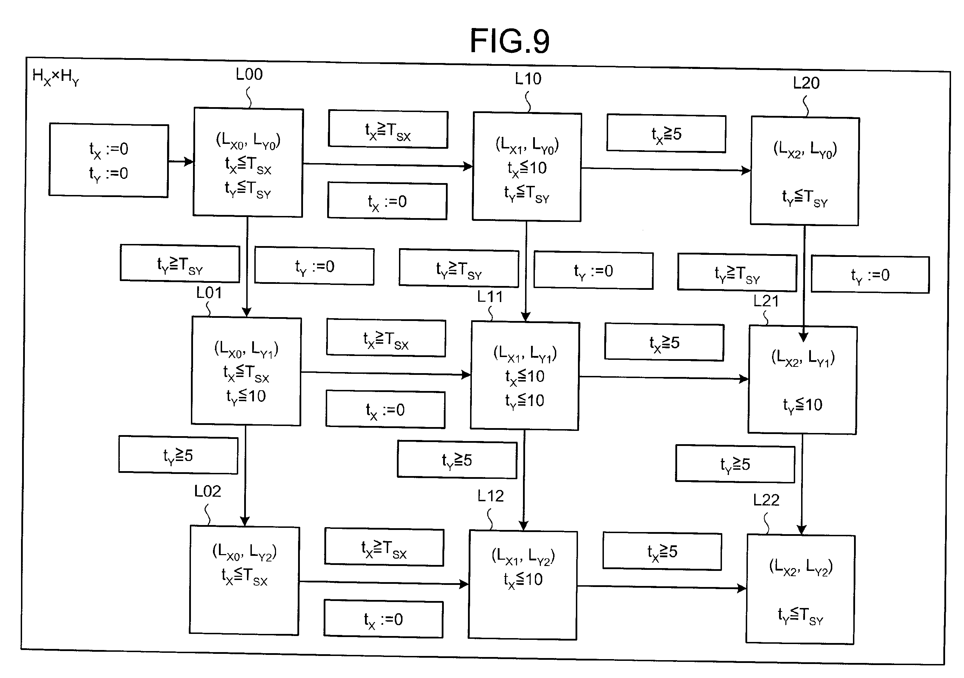

FIG. 8 depicts two automata for generating a product automaton, and FIG. 9 depicts the product automaton generated by using the two automata depicted in FIG. 8. For the convenience, it is assumed here that workflows X and Y each having three process proceedings are used instead of the workflow A having the 13 process proceedings and the workflow B having the seven process proceedings.
An automaton H_{X} depicted in FIG. 8 is generated by transforming the workflow X having process proceedings X0, X1, and X2, and has three locations LX0, LX1, and LX2. An automaton H_{Y} is generated by transforming the workflow Y having process proceedings Y0, Y1, and Y2, and has three locations LY0, LY1, and LY2. A product automaton depicted in FIG. 9 is generated by multiplying the automaton H_{X} by the automaton H_{Y}, and has nine locations L00, L01, L02, L10, L11, L12, L20, L21, and L22. Constituent elements of the automata and the product automaton depicted in FIGS. 8 and 9 are similar to those of the workflows A and B described above, and explanations thereof are omitted here.

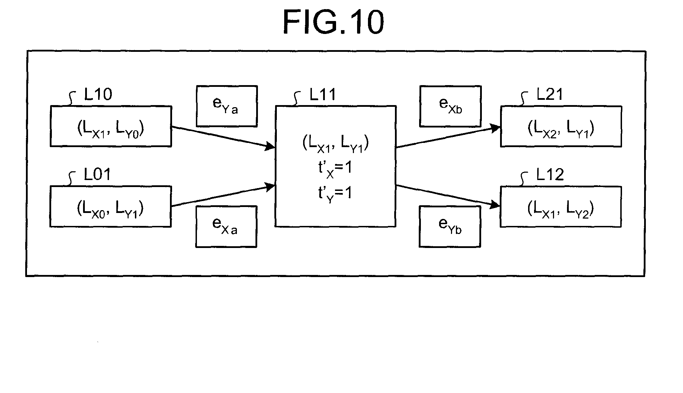

A procedure performed when there is a process proceeding in which a resource contention occurs during the process proceedings included in the product automaton, to alter the process proceeding according to a state of the resource contention is explained with reference to FIGS. 10 to 13. It is assumed here that a resource contention occurs in the location L11 among the process proceedings included in the product automaton depicted in FIG. 9.

FIG. 10 depicts a part of the product automaton with the location L11 in which the resource contention occurs at its center. The location L11 depicted in FIG. 10 is a location (L_{X1}, L_{Y1}) that is located at the center of the product automaton depicted in FIG. 9. "t'_{X}" and "t'_{Y}" described in the location L11 indicate variables per unit time of timer variables t_{X} and t_{Y}, respectively. Therefore, "t'_{X}=1" and "t'_{Y}=1" indicate that the time variables t_{X} and t_{Y} are incremented by one per minute, respectively.

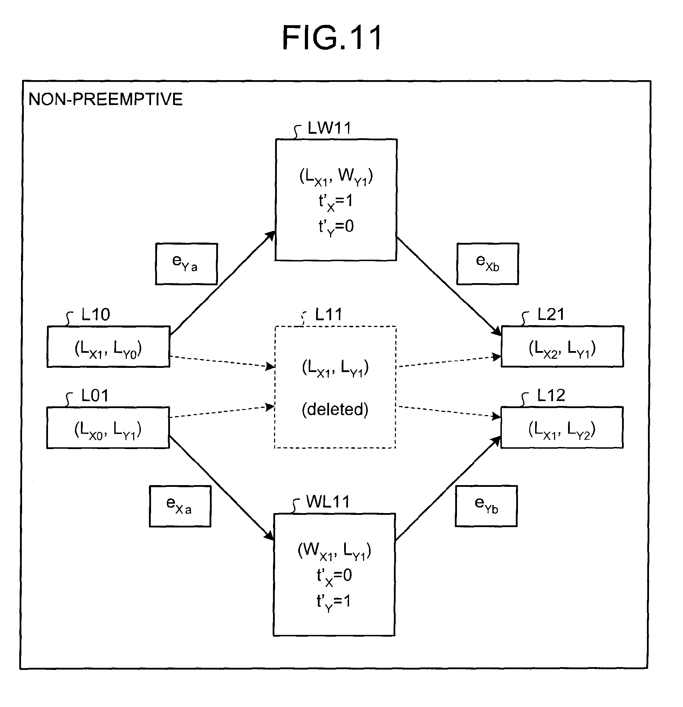

FIG. 11 is a schematic diagram for explaining alteration applied when the resource allocation in the location L11 depicted in FIG. 10 is of the non-preemptive type. In this case, locations LW11 and WL11 are newly added, and the location L11 is deleted. A transition from the location L10 to the location L11 is changed to a transition from the location L10 to the location LW11, and a transition from the location L01 to the location L11 is changed to a transition from the location L01 to the location WL11. Further, a transition from the location L11 to the location L21 is changed to a transition from the location LW11 to the location L21, and a transition from the location L11 to the location L12 is changed to a transition from the location WL11 to the location L12.

The location LW11 indicates that the process proceeding X1 is executed first, and the process proceeding Y1 is waited until the execution of the process procedure X1 is finished. "t'_{X}=1" and "t'_{Y}=0" described in the location LW11 indicate that the timer variable t_{X} is incremented by one per minute and the timer variable t_{Y} does not vary. The location WL11 indicates that the process proceeding Y1 is executed first, and the process proceeding X1 is waited until the execution of the process procedure Y1 is finished. "t'_{X}=0" and "t'_{Y}=1" described in the location WL11 indicate that the timer variable t_{X} does not vary and the timer variable t_{Y} is incremented by one per minute.

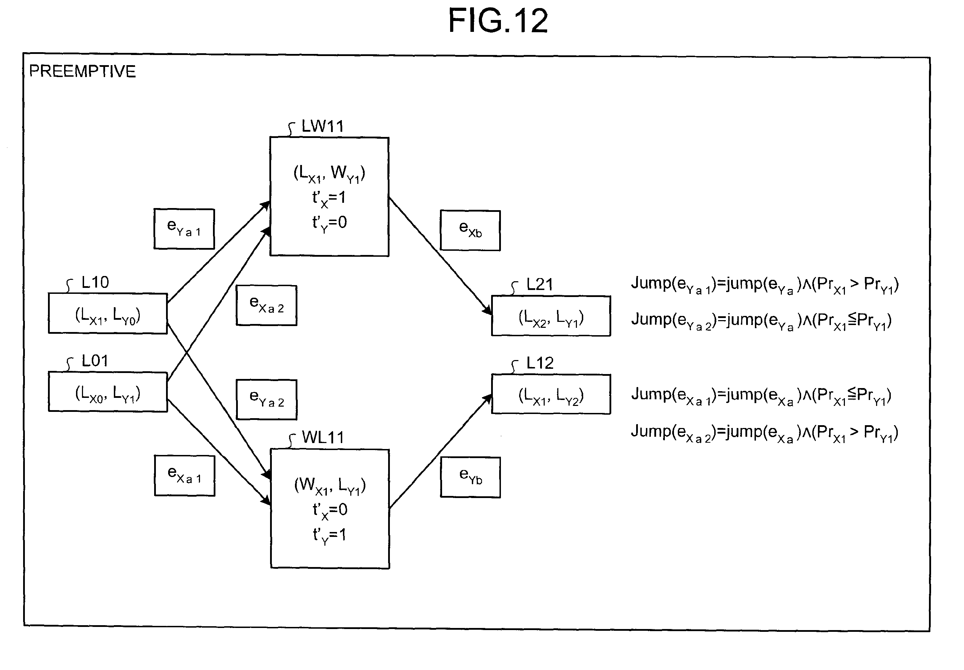

FIG. 12 is a schematic diagram for explaining alteration applied when the resource allocation in the location L11 depicted in FIG. 10 is of the preemptive type. In this case, the locations LW11 and WL11 are newly added and the location L11 is deleted like in the example of the non-preemptive type. A transition from the location L10 to the location L11 is changed to transitions from the location L10 to the location LW11 and to the location WL11. As conditions for determining a transition destination in this situation, a jump instruction for comparing priorities between the process proceedings X1 and Y1, and selecting the transition to the location LW11 when the priority of the process proceeding X1 is higher while selecting the transition to the location WL11 when the priority of the process proceeding Y1 is higher is added.

A transition from the location L01 to the location L11 is changed to transitions from the location L01 to the location LW11 and to the location WL11. A jump instruction for comparing the priorities between the process proceedings X1 and Y1, and selecting the transition to the location LW11 when the priority of the process proceeding X1 is higher while selecting the transition to the location WL11 when the priority of the process proceeding Y1 is higher is added as conditions for determining the transition destination in this situation.

A transition from the location L11 to the location L21 is changed to a transition from the location LW11 to the location L21, and a transition from the location L11 to the location L21 is changed to a transition from the location WL11 to the location L12.

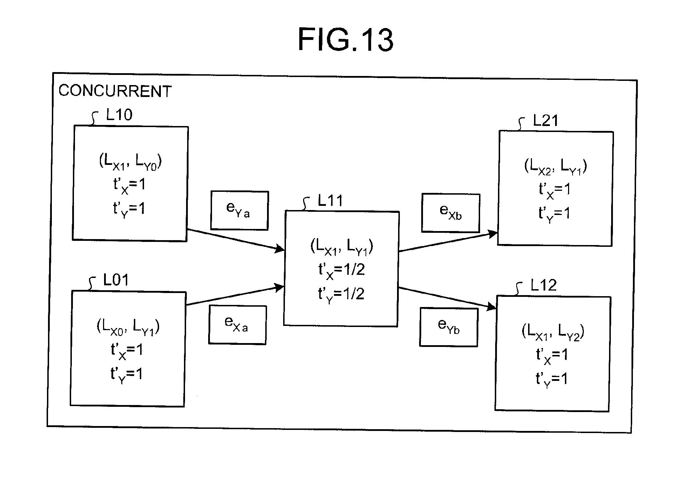

FIG. 13 is a schematic diagram for explaining alteration applied when the resource allocation in the location L11 depicted in FIG. 10 is of the concurrent type. In this case, "t'_{X}=1" and "t'_{Y}=1" described in the location L11 are changed to "t'_{X}=1/2" and "t'_{Y}=1/2", respectively. Because the execution time of the process proceedings increases in proportion to the number of process proceedings that contend for the resource, the variation per unit time is divided by the number of the process proceedings to represent the situation of the concurrent execution.

The constraint-violation determining unit 113 depicted in FIG. 1 determines whether a constraint violation occurs when the plural process procedures are executed by using the state transition mode generated by the state-transition-model generating unit 112 and the plural constraints received by the receiving unit 111. The constraint-violation determining unit 113 further determines whether a constraint violation occurs by using the altered state transition model generated by the state-transition-model generating unit 112 and the constraints altered by the workflow-definition altering unit 114 (explained later).

Various model checking methods (see E.M. Clarke, O. Grumberg, and D.A. Peled, Model Checking, The MIT Press, 1999.) can be used as a method for determining whether a constraint violation occurs. The model checking methods include model checking, SPIN (see G.J. Holzmann, "The model checker SPIN", IEEE Transactions on Software Engineering, Vol. 23, No. 5, 1997.), and HyTech (see HyTech: The HYbrid TECHnology Tool, available at
http://embedded.eecs.berkeley.edu/research/hytech/), for example.

The model checking is a typical technique for analyzing a behavior of a system modeled by using the Hybrid automata. The SPIN is a technique in which computing times are reduced by various algorithms. The HyTech is a technique that enables to facilitate expressions of the Hybrid automata.

In the model checking, properties to be checked whether the system comply with are first expressed by a temporal logical formula such as Computational Tree Logic (CTL) or Linear-time Temporal Logic (LTL). Negation of the temporal logical formula is then converted into an automaton, and a composite automaton is generated by using this automaton and a Hybrid automaton of the modeled system. It is then determined whether a set of languages accepted by the composite automaton is empty. When the set is empty, both the modeled system and the negation of the temporal logical formula are never satisfied. That is, it implies that the modeled system satisfies the properties expressed by the temporal logical formula. When there is some language accepted by the composite automaton, it implies that the modeled system does not satisfy the properties expressed by the temporal logical formula. The set of the accepted languages exemplifies that the system does not satisfy the properties expressed by the temporal logical formula.

The workflow-definition altering unit 114 depicted in FIG. 1 alters any one or some of the process procedures, the policies, and the constraints when the constraint-violation determining unit 113 determines that a constraint violation occurs. Methods for alteration include a method of changing a start time of a workflow included in a process procedure, a method of changing an allocation type or a priority included in a policy, a method of changing an end time of a workflow included in a constraint, and the like.

A method of applying alteration is explained specifically below. For example, when a workflow definition associated with the "workflow A" and the "workflow B" is provided in which "two workflows have been finished at a 400th minute" is defined as a constraint and when it is determined that the end time of the workflow A will be a 405th minute, following alteration can be applied.

When the start time of the workflow included in the process procedures is to be changed, the start time of the workflow B is changed to a 100th minute, which is a half of a 200th minute as the present start time, for example. When the start time of the workflow B is advanced, the processing timings of the workflows can be differentiated. Therefore, the resource contention can be eliminated, and the processing time of the workflow A can be reduced.

When the allocation type or the priory included in the policies is to be changed, and when the allocation type for the server B used in the workflows A and B is set as "concurrent", for example, the allocation type for the server B is changed to "preemptive" to provide the workflow A with a higher priority than the workflow B. The processing time of the workflow A can be reduced by allowing the workflow A to have priority use of the resource.

When the end times of the workflows included in the constraints are to be changed, the end times of the two workflows are changed from the present end times (the 400th minute) to the 405th minute, which is the end time of the workflow A, for example. When the end times included in the constraint are adjusted to the later end times, the workflow A can be assuredly finished before the end time included in the constraints. That is, the constraint violation can be surely eliminated.

While the workflow-definition altering unit 114 can alter a part or all of the process procedures, the policies, and the constraints included in the workflow definition, what is important is to eliminate the constraint violation by application of the alteration. Therefore, the methods of altering the process procedures, the policies, and the constraints, and the specific changes are not limited to those described above. To efficiently eliminate the constraint violation, it is possible to store a result of the determination of a constraint violation with respect to each of the alteration methods and the specific changes and analyze the result, for example, thereby learning the alteration methods and the specific changes.

When the workflow-definition altering unit 114 applies the alteration, the display unit 115 displays the workflow definition including the process procedures, the policies, and the constraints after the application of the alteration, as an alternative workflow definition, on a monitor of the workflow-definition alteration device 10. The display unit 115 displays details of the constraint violation on the monitor of the workflow-definition alteration device 10, in addition to the alternative workflow definition. The details of the constraint violation include a message stating that a constraint violation occurs.

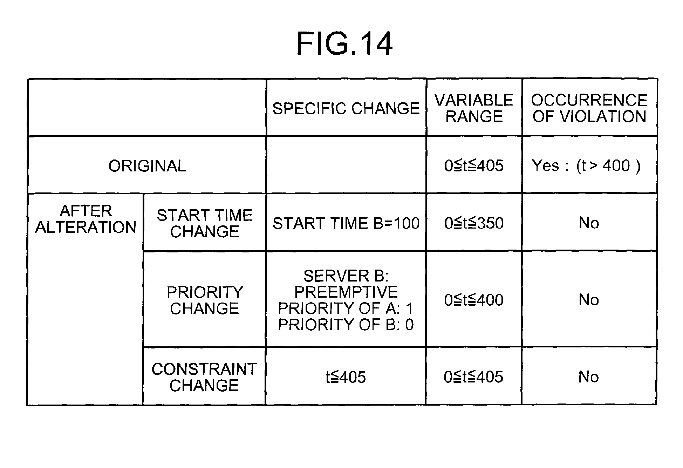

FIG. 14 is an example of alternative workflow data for displaying an alternative workflow. As depicted in FIG. 14, the alternative workflow data include data items of a variable range and occurrence of a violation associated with an original workflow inputted by the system administrator, and specific changes, variable ranges, and occurrence of violations associated with an alternative workflow after alteration, for example. Details of the alteration applied by the workflow-definition altering unit 114 are stored in the specific changes. Possible ranges of the variable to be used in the determination by the constraint-violation determining unit 113 are stored in the variable ranges. Results of the determination by the constraint-violation determining unit 113 are stored in the occurrence of violations.

When the workflow-definition altering unit 114 applies no alteration, that is, no constraint violation occurs, the display unit 115 displays a message stating that no constraint violation occurs on the monitor of the workflow-definition alteration device 10. The display unit 115 can display the workflow definition including the process procedures, the policies, and the constraints received by the receiving unit 111 on the monitor of the workflow-definition alteration device 10, in addition to the message stating that no constraint violation occurs.

When the constraint-violation determining unit 113 determines that constraint violations occur and when the number of the constraint violations determined to occur reaches a predetermined value, the display unit 115 can display a message stating that it is impossible to present an alternative workflow definition on the monitor of the workflow-definition alteration device 10. This enables the system administrator to recognize that elimination of the constraint violations is difficult.

The method of presenting the alternative workflow definition and the like to the system administrator is not limited to the display on the monitor of the workflow-definition alteration device 10. For example, the alternative workflow definition can be presented by outputting on a printer or outputting as electronic data.

The altered-variable specifying unit 116 compares the state transition model and the altered state transition model generated by the state-transition-model generating unit 112, and specifies a variable having different values before and after the alteration of the state transition model. The variable specified by the altered-variable specifying unit 116 is displayed by the display unit 115 on the monitor of the workflow-definition alteration device 10.

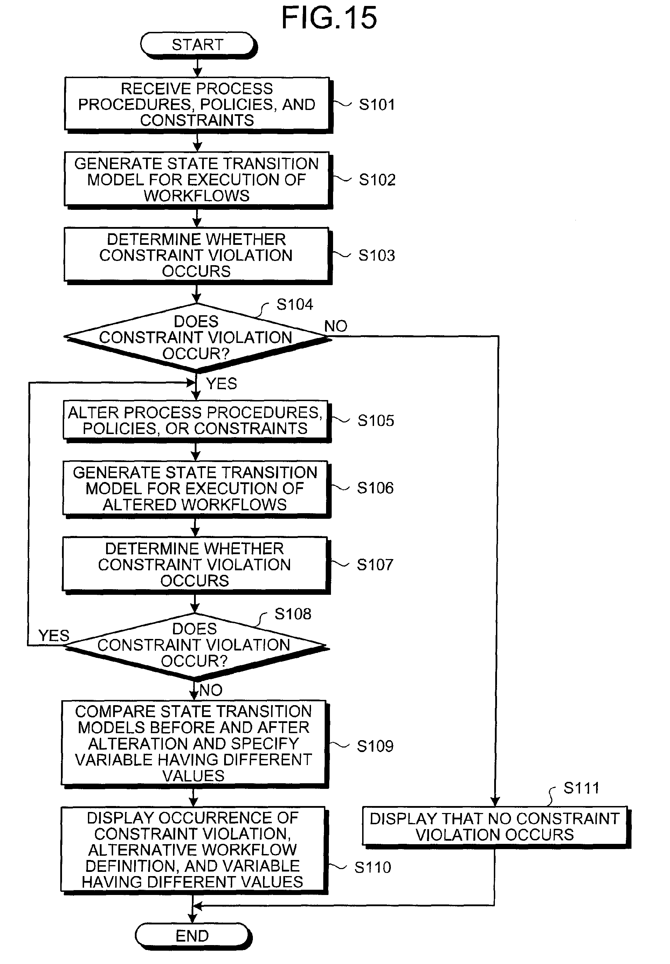

A process procedure performed by the workflow-definition alteration device 10 according to the first embodiment is explained with reference to FIG. 15. FIG. 15 is a flowchart of a process procedure performed by the workflow-definition alteration device. In this example, a process procedure of determining whether a constraint violation occurs in plural workflows by using a workflow definition inputted by the system administrator, and altering the workflow definition when a constraint violation occurs to present an altered workflow definition to the system administrator is explained.

The receiving unit 111 of the workflow-definition alteration device 10 first receives a workflow definition including plural process procedures, plural policies, and plural constraints generated by the system administrator (Step S101).

The state-transition-model generating unit 112 then generates a state transition model for execution of the plural workflows by using the process procedures and the policies received by the receiving unit 111 (Step S102).

The constraint-violation determining unit 113 then determines whether a constraint violation occurs when the workflows are executed by using the state transition model generated by the state-transition-model generating unit 112 and the constraints received by the receiving unit 111 (Step S103). When a result of the determination is No (No at Step S104), the display unit 115 displays a message stating that no constraint violation occurs on the monitor of the workflow-definition alteration device 10 (Step S111), and the process is ended.

When it is determined as a result of the determination at Step S103 that a constraint violation occurs (YES at Step S104), the workflow-definition altering unit 114 alters any one or some of the process procedures, the policies, and the constraints (Step S105).

The state-transition-model generating unit 112 then generates a state transition model for execution of plural altered workflows by using the process procedures and the policies altered by the workflow-definition altering unit 114 at Step S105 (Step S106).

The constraint-violation determining unit 113 then determines whether a constraint violation occurs by using the altered state transition model generated by the state-transition-model generating unit 112 and the constraints altered by the workflow-definition altering unit 114 at Step S105 (Step S107). When a result of the determination is YES (YES at Step S108), the process proceeds to Step S105.

On the other hand, when it is determined as a result of the determination at Step S107 that no constraint violation occurs (NO at Step S108), the altered-variable specifying unit 116 compares the state transition model and the altered state transition model generated by the state-transition-model generating unit 112, and specifies a variable having different values before and after the alteration of the state transition model (Step S109).

The display unit 115 then displays a message stating that the constraint violation occurs, an alternative workflow definition including the process procedures, the policies, and the constraints having the alteration applied thereto, and the variable having different values before and after the alteration of the state transition model on the monitor of the workflow-definition alteration device 10 (Step S110), and the process is ended.

As described above, the workflow-definition alteration device 10 according to the first embodiment can generate by using the plural process procedures and the plural policies inputted by the system administrator, a state transition model for execution of workflows corresponding to the plural process procedures, and determine whether a constraint violation occurs when the workflows are executed, by using the generated state transition model and the plural constraints inputted by the system administrator. When it is determined in this determination that a constraint violation occurs, the workflow-definition alteration device 10 can alter any one or some of the process procedures, the policies, and the constraints, and present a workflow definition including the process procedures, the policies, and the constraints having been altered, as an alternative workflow definition to the system administrator.

The workflow-definition alteration device 10 can further determine whether a constraint violation occurs when the altered workflows are executed by using the state transition model based on the altered process procedures and policies, and the altered constraints, and when it is determined in the determination that no constraint violation occurs, present a workflow definition including the altered process procedures, policies, and constraints as an alternative workflow definition to the system administrator.

Therefore, the workflow-definition alteration device 10 according to the first embodiment can eliminate a constraint violation among the plural workflows before execution of the workflows.

The configuration of the workflow-definition alteration device 10 according to the first embodiment depicted in FIG. 1 can be variously modified without departing from the spirit or scope of the present invention. For example, the equivalent function to that of the workflow-definition alteration device 10 can be realized by implementing the function of the controller 11 of the workflow-definition alteration device 10 as software and causing a computer to run the software. An example of a computer that executes a workflow-definition alteration program 1071 in which the function of the controller 11 is implemented as software is explained below.

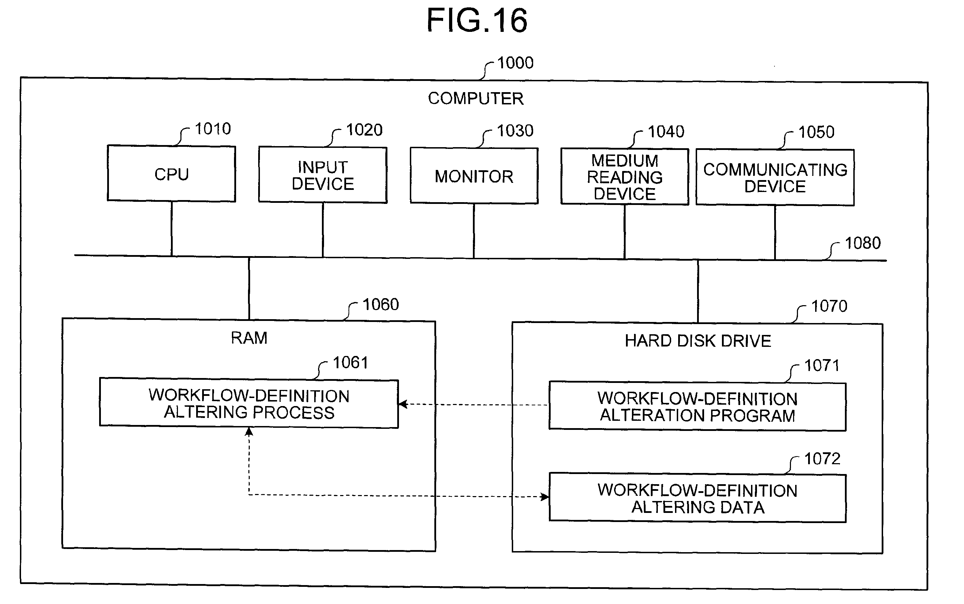

FIG. 16 is a functional configuration diagram of a computer that executes a workflow-definition alteration program. The computer 1000 includes a CPU 1010 that performs various arithmetic processes, an input device 1020 that receives input of data from a user, a monitor 1030 that displays various types of information, a medium reading device 1040 that reads a program and the like from a recording medium, a communicating device 1050 that exchanges data with other computers through a network, a random access memory (RAM) 1060 that temporarily stores therein various types of information, and a hard disk drive 1070, which are connected with each other via a bus 1080.

The hard disk drive 1070 stores therein the workflow-definition alteration program 1071 having the same function as that of the controller 11 depicted in FIG. 1, and workflow-definition altering data 1072 corresponding to various data stored in the storage unit 12 depicted in FIG. 1. The workflow-definition altering data 1072 can be properly distributed and stored in other computers connected with the network.

When the CPU 1010 reads the workflow-definition alteration program 1071 from the hard disk drive 1070 and expands the program 1071 in the RAM 1060, the workflow-definition alteration program 1071 functions as a workflow-definition altering process 1061. The workflow-definition altering process 1061 properly expands information read from the workflow-definition altering data 1072 or the like in an area allocated thereto on the RAM 1060, and performs the various data processes based on the expanded data or the like.

It is not always necessary to store the workflow-definition alteration program 1071 in the hard disk drive 1070, and the program 1071 can be stored in a recording medium such as a compact disk read only memory (CD-ROM), and read and executed by the computer 1000. The program can be stored in another computer (or server) connected to the computer 1000 via a public line, the Internet, a local area network (LAN), a wide area network (WAN), or the like, and then the computer 1000 can read the program therefrom. Second embodiment

In the first embodiment, the workflow-definition alteration device 10 that receives a workflow definition, and, when the workflows violate the constraints, eliminates the constraint violation by automatically altering the workflow definition is explained. However, when the workflows violate the constraints, the constraint violation can be eliminated by receiving an operation for altering the workflow definition from the system administrator. In a second embodiment, an example in which when the workflows violate the constraints, an alteration operation for the workflow definition is received from the system administrator is explained.

A workflow-definition alteration device according to the second embodiment receives the workflow definition generated by the system administrator, generates the state transition model, and then determines whether the state transition model violates the constraints. When the state transition model violates the constraints, the workflow-definition alteration device displays a screen showing the workflows and the constraints by using graphics and character strings (hereinafter, "workflow screen") on the monitor, and receives an alteration operation for the workflow definition on the workflow screen. When receiving the alteration operation for the workflow definition, the workflow-definition alteration device determines again whether a constraint violation occurs and, when the constraint violation occurs, displays again the workflow screen on the monitor.

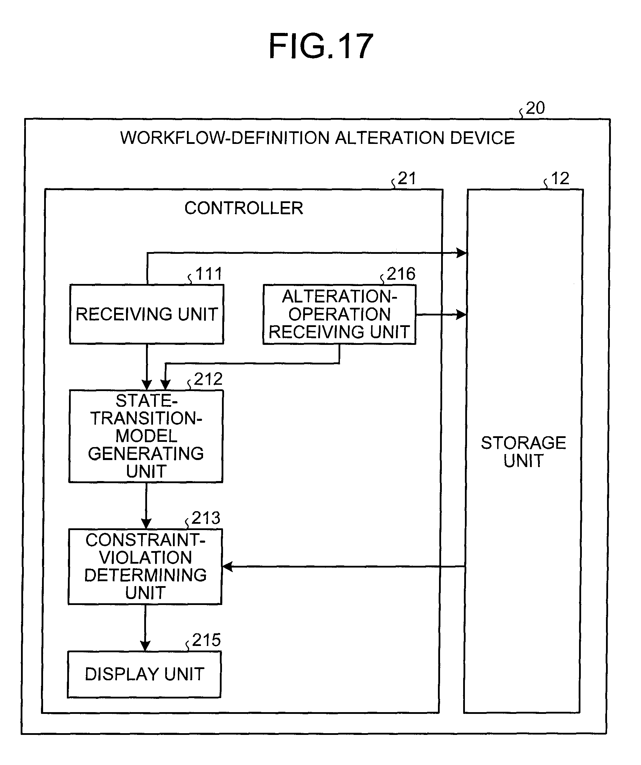

Functions of the workflow-definition alteration device according to the second embodiment are explained in detail with reference to FIG. 17. FIG. 17 is a functional configuration diagram of the workflow-definition alteration device according to the second embodiment. As depicted in FIG. 17, a workflow-definition alteration device 20 includes a controller 21 that controls the whole workflow-definition alteration device 20, and the storage unit 12. Parts having functions identical to those of the constituent parts depicted in FIG. 1 are denoted by like reference numerals and detailed explanations thereof will be omitted.

A state-transition-model generating unit 212 generates a state transition model by using the workflow-definition received by the receiving unit 111 in the same manner as the state-transition-model generating unit 112 explained in the first embodiment. The state-transition-model generating unit 212 according to the second embodiment further generates a state transition model by using the workflow definition applied with alteration received by an alteration-operation receiving unit 216 (explained later).

A constraint-violation determining unit 213 determines whether a constraint violation occurs when the plural process procedures are performed by using the state transition model generated by the state-transition-model generating unit 212 and the plural constraints received by the receiving unit 111. When determining that a constraint violation occurs, the constraint-violation determining unit 213 specifies a workflow determined to include the constraint violation (hereinafter, "constraint-violating workflow") and a workflow including a process procedure that simultaneously uses the same resource as process procedures included in the constraint-violating workflow (hereinafter, "resource-sharing workflow").

A display unit 215 displays a result of the determination on the constraint violation by the constraint-violation determining unit 213 on a monitor of the workflow-definition alteration device 20. Specifically, when the constraint-violation determining unit 213 determines that no constraint violation occurs, the display unit 215 displays a message stating that no constraint violation occurs on the monitor of the workflow-definition alteration device 20.

Meanwhile, when the constraint-violation determining unit 213 determines that a constraint violation occurs, the display unit 215 displays a workflow screen showing the constraint-violating workflow and the resource-sharing workflow by using graphics and character strings on the monitor. At that time, the display unit 215 distinguishably displays process procedures using the same resource, and process procedures not using the same resource. The display unit 215 also displays a violated constraint by using graphics and character strings. When two or more process procedures included in different workflows are performed at the same time, the display unit 215 displays the two or more process procedures with taking one of horizontal and vertical axes of the workflow screen as a time axis, to be recognized that these process procedures are performed at the same time.

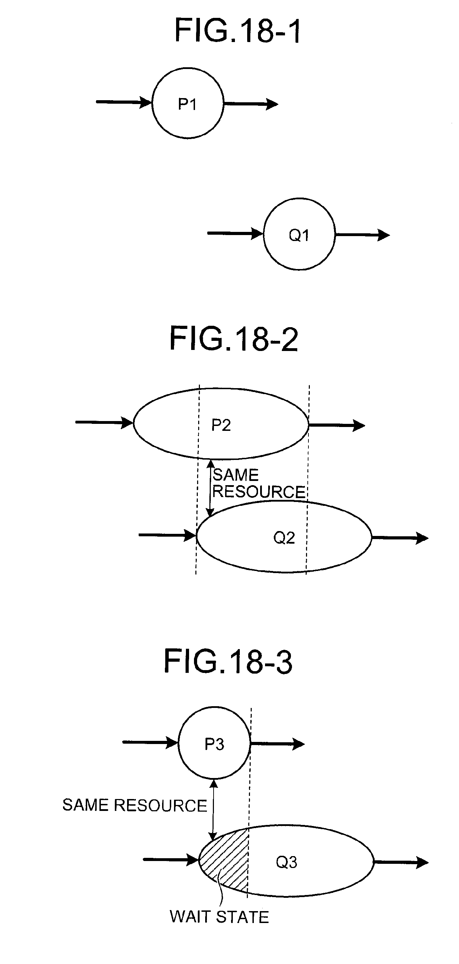

The workflow screen displayed by the display unit 215 is explained below with reference to FIGS. 18-1 to 18-4, 19-1 to 19-3, and 20. It is assumed below that the horizontal axis of the workflow screen is the time axis.

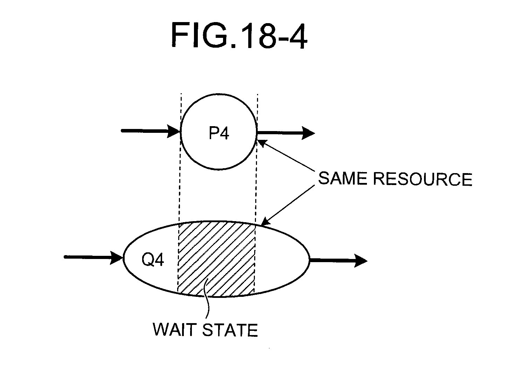

Methods performed by the display unit 215 to distinguishably display the process procedures using the same resource and the process procedures not using the same resource are explained with references to FIGS. 18-1 to 18-4. Method of displaying process procedures P1 to P4 included in a workflow P and process procedure Q1 to Q4 included in a workflow Q are explained below.

FIG. 18-1 is an example of display of two process procedures not using the same resource. It is assumed that the process procedures P1 and Q1 depicted in FIG. 18-1 do not use the same resource. In this example, the display unit 215 displays the process procedures by using predetermined graphics. Specifically, the display unit 215 displays the process procedures P1 and Q1 in circular shapes as depicted in FIG. 18-1. Because the horizontal axis is the time axis in the example depicted in FIG. 18-1, it is indicated that the process procedure P1 is started prior to the process procedure Q1.

FIG. 18-2 is an example of display of two process procedures simultaneously using the same resource. It is assumed that the allocation types of the process procedures P2 and Q2 depicted in FIG. 18-2 are concurrent, and there is a period in which the same resource is simultaneously used. It is also assumed that the processing times of the process procedures P2 and Q2 become longer when the same resource is used. In this example, the display unit 215 displays the process procedures P2 and Q2 by using graphics and character strings enabling to visually indicate that the process procedures of the process procedures P2 and Q2 become longer than those of the process procedures that do not use the same resource (see FIG. 18-1). The display unit 215 also displays the fact that the process procedures P2 and Q2 use the same resource by using graphics and a character string, to indicate a reason why the process procedures become longer.

In the example depicted in FIG. 18-2, the display unit 215 displays the process procedures P2 and Q2 in elliptical shapes elongated in the time axis direction. The display unit 215 also displays an arrow in the vertical axis direction linking the process procedures P2 and Q2, and a character string "same resource". In this way, the system administrator can visually recognize that there is a period in which the process procedures P2 and Q2 simultaneously use the same resource, and that the processing times of the process procedures P2 and Q2 become longer.

FIG. 18-3 is another example of display of two process procedures simultaneously using the same resource. It is assumed that the allocation types of process procedures P3 and Q3 depicted in FIG. 18-3 are preemptive, and there is a period in which the process procedures use the same resource. It is also assumed that the process procedure P3 using the resource earlier has a higher priority than the process procedure Q3 using the resource later. Therefore, after process proceedings of the process procedure P3 are completely finished, process proceedings of the process procedure Q3 are started. In this example, the display unit 215 displays the process procedures P3 and Q4 with graphics and character strings that enable to visually indicate that the process procedures Q3 is in a wait state until the process proceedings of the process procedure P3 are completely finished.

In the example depicted in FIG. 18-3, the display unit 215 displays the process procedure Q3 in an elliptical shape elongated in the time axis direction. The display unit 215 also displays the fact that the process procedures P3 and Q3 use the same resource, and the period in which the process procedure Q3 is in the wait state in a shaded area together with a character string "wait state". In this way, the system administrator can visually recognize that the process procedure Q3 is in the wait state until the process proceedings of the process procedure P3 are completed, and the processing time of the process procedure Q3 becomes longer.

FIG. 18-4 is another example of display of two process procedures simultaneously using the same resource. It is assumed that the allocation types of process procedures P4 and Q4 depicted in FIG. 18-4 are preemptive and there is a period in which the same resource is used. It is also assumed that the process procedure Q4 using the resource earlier has a lower priority than the process procedure P4 using the resource later. Therefore, process proceedings of the process procedure P4 are interposed into process proceedings of the process procedures Q4, and the process proceedings of the process procedure Q4 are resumed after the process proceedings of the process procedure P4 are completed. In this example, the display unit 215 displays the process procedures P4 and Q4 with graphics and character strings that enable to visually indicate that the process proceedings of the process procedure P4 are interposed into the process proceedings of the process procedure Q4, and the process proceedings of the process procedure Q4 are resumed after the process proceedings of the process procedure P4 are completed.

In the example depicted in FIG. 18-4, the display unit 215 displays the process procedure Q4 in an elliptical shape elongated in the time axis direction. The display unit 215 also displays the fact that the process procedures P4 and Q4 use the same resource, and the period in which the process procedure Q4 is in the wait state in a shaded area together with a character string "wait state" Accordingly, the system administrator can visually recognized that the process proceedings of the process procedure P4 are interposed into the process proceedings of the process procedure Q4, and the process proceedings of the process procedure Q4 are resumed after the process proceedings of the process procedure P4 are completed.

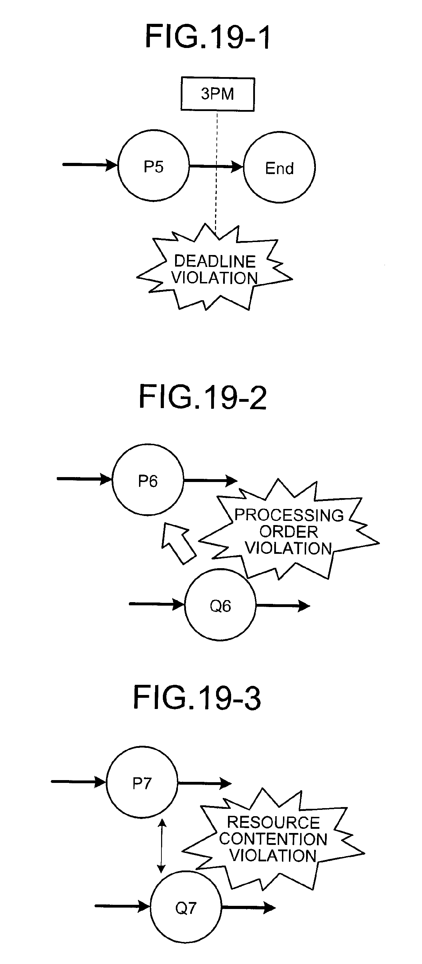

Methods performed by the display unit 215 to display a constraint violation are explained next with reference to FIGS. 19-1 to 19-3. Methods of displaying process procedures P5 to P7 included in the workflow P and process procedures Q6 and Q7 included in the workflow Q are explained below.

FIG. 19-1 is an example of display of a workflow that violates a constraint on a workflow completion time. It is assumed that the workflow P depicted in FIG. 19-1 has a constraint of "starting at 1 p.m. and ending by 3 p.m.". It is also assumed that all of process proceedings in the workflow P will be ended after "3 p.m.". In this example, the display unit 215 displays that not all the process proceedings in the workflow P will be ended by "3 p.m." and the workflow P violates the constraint.

In the example depicted in FIG. 19-1, the display unit 215 displays a line in the vertical axis direction and the completion time specified in the constraint and displays a character string "deadline violation" at a position corresponding to "3 p.m." in the workflow (between the process procedure P5 and End in the example depicted in FIG. 19-1). This enables the system administrator to visually recognize the workflow P violates the constraint of "ending by 3 p.m.".

FIG. 19-2 is an example of display of workflows that violate a constraint on the processing order. It is assumed that the process procedures P6 and Q6 depicted in FIG. 19-2 have a constraint of "starting process proceedings of the process procedure P6 after process proceedings of the process procedure Q6 are completed". It is also assumed that the process proceedings of the process procedure Q6 are started after the process proceedings of the process procedure P6 are completed. In this example, the display unit 215 displays the fact that the process procedures P6 and Q6 violate the constraint on the processing order.

In the example depicted in FIG. 19-2, the display unit 215 displays an arrow pointing from the process procedure Q6 to the process procedure P6, and displays a character string "processing order violation". In this way, the system administrator can visually recognize the process procedures P6 and Q6 violate the constraint on the processing order.

FIG. 19-3 is an example of display of workflows that violate a constraint on a resource contention. It is assumed that the process procedures P7 and Q7 depicted in FIG. 19-3 use the same resource and that the resource to be used in the process procedures P7 and Q7 has a constraint of "not being simultaneously used in two or more process procedures". In this example, the display unit 215 displays the fact that the process procedures P7 and Q7 violate the constraint on the resource contention.

In the example depicted in FIG. 19-3, the display unit 215 displays the process procedures P7 and Q7 linked by an arrow in the vertical axis direction, together with a character string "resource contention violation". Accordingly, the system administrator can visually recognize the process procedures P7 and Q7 simultaneously use the resource that is inhibited to be simultaneously used and therefore violate the constraint on the resource contention.

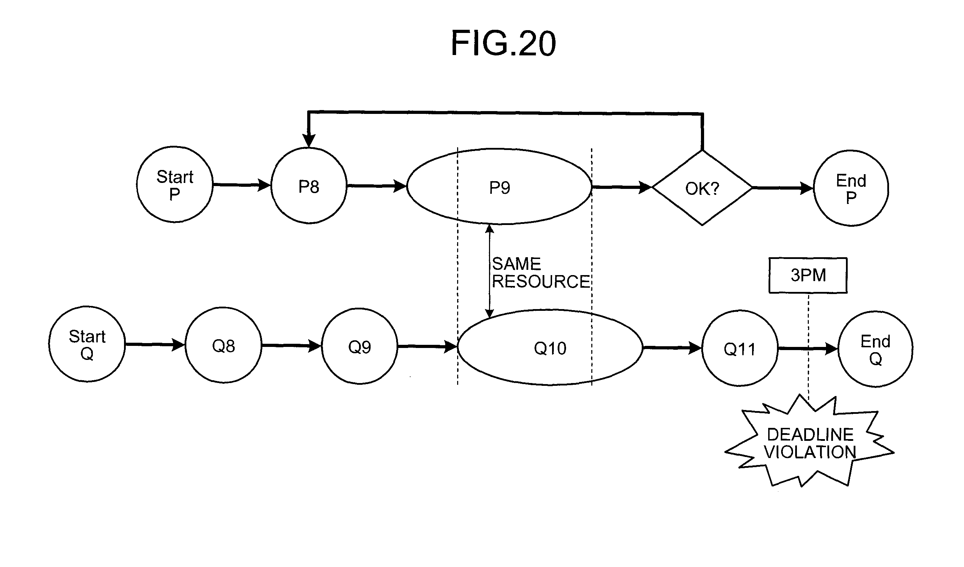

An example of the workflow screen using the methods of displaying the workflow screen by means of the display unit 215 as depicted in FIGS. 18-1 to 18-4 and 19-1 to 19-3 above described is explained. FIG. 20 is an example of the workflow screen.

On the workflow screen depicted in FIG. 20, the workflow P including process procedures P8 and P9 and the workflow Q including process procedures Q8 to Q11 are displayed. The workflow Q violates a constraint on the completion time of the workflow. That is, it implies that the constraint-violation determining unit 213 determines that the workflow Q is a constraint-violating workflow and that the workflow P including the process procedure P9 that uses the same resource as the process procedure Q10 included in the workflow Q is a resource-sharing workflow.

By viewing the workflow screen depicted in FIG. 20, the system administrator can recognize that the processing time of the workflow Q10 becomes longer because the process procedures P9 and Q10 simultaneously use the same resource. The system administrator can recognize that the workflow Q violates the constraint on the completion time of the workflow consequently.

The alteration-operation receiving unit 216 depicted in FIG. 17 receives an alteration operation for the workflow definition on the workflow screen. Specifically, the alteration-operation receiving unit 216 receives an alteration operation for the process procedures, the policies, or the constraints through an input device such as a mouse or a keyboard, and causes the state-transition-model generating unit 212 to generate a state transition model by using the altered workflow definition. The constraint-violation determining unit 213 performs again the process of determining a constraint violation.

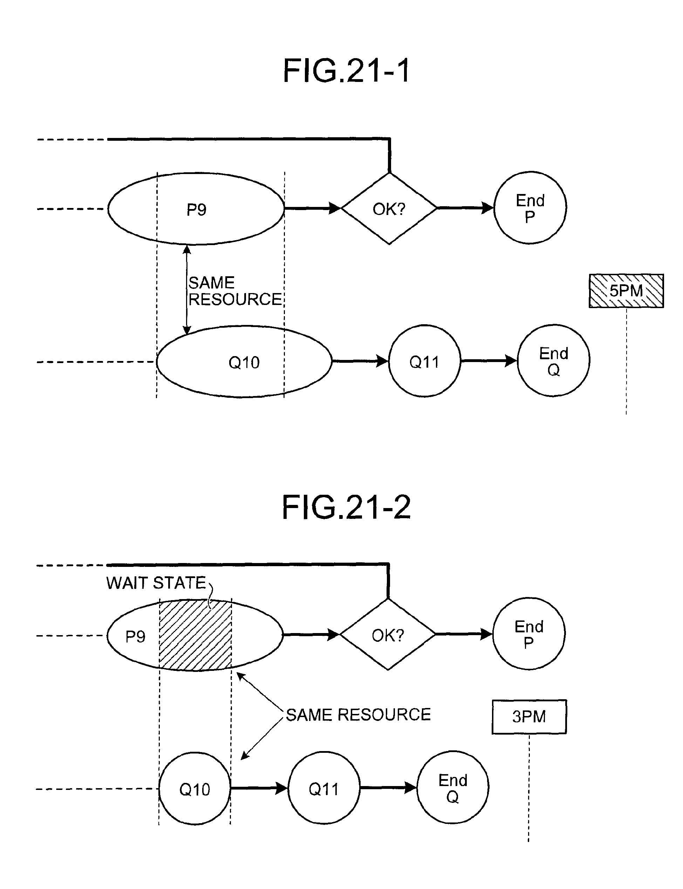

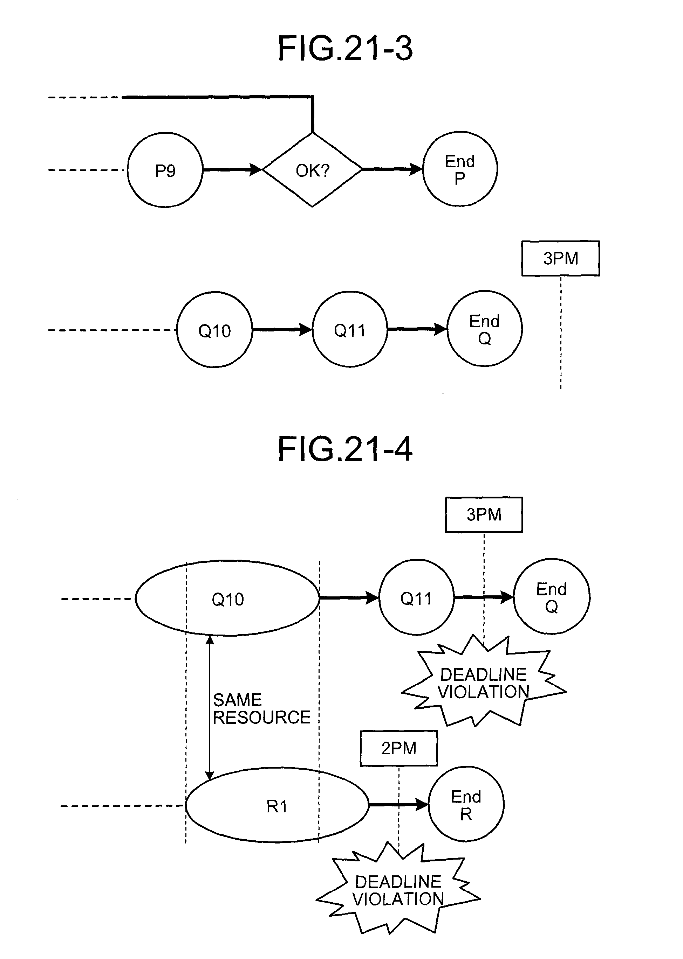

The alteration operation for the workflow definition received by the alteration-operation receiving unit 216 on the workflow screen is explained with reference to FIGS. 21-1 to 21-4. An example in which the alteration operation for the workflow definition is received on the workflow screen as depicted in FIG. 20 is explained below.

FIG. 21-1 is an example of an alteration operation for a workflow completion time. In the example depicted in FIG. 21-1, the alteration-operation receiving unit 216 receives an operation for altering a constraint on the workflow completion time of "ending the workflow Q by 3 p.m." to a constraint of "ending the workflow Q by 5 p.m.", and alters the workflow completion time of the workflow Q.

For example, when a line indicating a deadline (line beneath "3PM" in the example depicted in FIG. 20) is moved by a drag operation with a mouse or the like, the alteration-operation receiving unit 216 receives the alteration operation for the workflow completion time. When the line indicating the deadline is clicked with the mouse or the like, the alteration-operation receiving unit 216 causes a transition to a screen for editing the workflow completion time, and, when the workflow completion time is edited on the screen, receives the alteration operation for the workflow completion time. In this way, the constraint violation occurring in the workflow Q can be eliminated.

FIG. 21-2 is an example of an alteration operation for the allocation types. In the example depicted in FIG. 21-2, the alteration-operation receiving unit 216 receives an operation for altering the allocation types of the process procedures P9 and Q10 from concurrent to non-preemptive, and alters the allocation types of the process procedures P9 and Q10.

For example, when a graphic in an elliptical shape representing the process procedure P9 or a graphic in an elliptical shape representing the process procedure Q10 is clicked with the mouse or the like, the alteration-operation receiving unit 216 causes a transition to a screen for editing the allocation types and the priorities, and, when edition is performed on the screen to alter the allocation types from concurrent to non-preemptive and assign to the process procedure Q10 a higher priority than the process procedure P9, receives the alteration operation for the allocation types.

Further, for example, when the graphic in the elliptical shape representing the process procedure P9 or the graphic in the elliptical shape representing the process procedure Q10 is clicked with the mouse or the like, the alteration-operation receiving unit 216 displays a pull-down menu for selecting the allocation types and the priorities, and receives an alteration operation for the allocation type by altering the allocation types from concurrent to non-preemptive and selecting the priorities to assign to the process procedure Q10 a higher priority than the process procedure P9 on the pull-down menu. In this way, the process procedure Q10 is performed preferentially, and the processing time of the process procedure Q10 is reduced. Therefore, the constraint violation occurring in the workflow Q can be eliminated.

FIG. 21-3 is an example of a resource alteration operation. In the example depicted in FIG. 21-3, the alteration-operation receiving unit 216 receives an operation for altering the resource to be used by the process procedure P9 or Q10, and alters the resource to be used by the process procedure P9 or Q10.

For example, like in the example described above, when a graphic in an elliptical shape representing the process procedure P9 or a graphic in an elliptical shape representing the process procedure Q10 is clicked with the mouse, the alteration-operation receiving unit 216 causes a transition to a screen for altering the resource to be used or displays a pull-down menu for selecting a resource to be used, thereby receiving the resource alteration operation. Accordingly, the sharing of the same resource between the process procedures P9 and Q10 can be avoided, and the processing time of the process procedure Q10 is reduced. Therefore, the constraint violation occurring in the workflow Q can be eliminated.

The alteration operations for the workflow definition are not limited to the examples depicted in FIGS. 21-1 to 21-3. Other examples of the alteration operation for the workflow definition are explained. When the constraint on the processing order is violated as in the example depicted in FIG. 19-2, and when the graphics indicating the constraint violation are clicked with the mouse or the like, the alteration-operation receiving unit 216 displays a pull-down menu including menus of "constraint elimination", "order alteration", and the like. When the constraint elimination is selected, the alteration-operation receiving unit 216 eliminates the constraint on the processing order. When the order alteration is selected, the alteration-operation receiving unit 216 alters the constraint into one including a reversed order of the process procedures. In the example depicted in FIG. 19-2, when the order alteration is selected, the alteration-operation receiving unit 216 alters the constraint of "starting process proceedings of the process procedure P6 after process proceedings of the process procedure Q6 are completed" into a constraint of "starting process proceedings of the process procedure Q6 after process proceedings of the process procedure P6 are completed".

When the constraint on the resource contention is violated as in the example depicted in FIG. 19-3, and when the graphics representing the constraint violation are clicked with the mouse or the like, the alteration-operation receiving unit 216 displays a pull-down menu including menus of "constraint elimination", "alteration of the number of multiplicities", and the like. When alteration of the multiplicity is selected, the alteration-operation receiving unit 216 causes a transition to a screen for editing the number of process procedures that can simultaneously use the same resource (hereinafter, "the number of multiplicities"). In the example depicted in FIG. 19-3, when the number of multiplicities for the resource used by the process procedures P7 and Q7 is changed from "1" to "2", the constraint violation for the resource contention can be eliminated.

An example in which another constraint violation occurs after the alteration-operation receiving unit 216 receives an alteration operation for the workflow definition is explained. FIG. 21-4 is an example of a workflow screen displayed upon receipt of an alteration operation. FIG. 21-4 depicts a workflow screen that is displayed when another constraint violation occurs upon receipt of an operation for altering the resource to be used by the process procedure Q10 depicted in FIG. 20.

In the example depicted in FIG. 21-4, the processing time of the process procedure Q10 is not reduced and the constraint violation of the workflow Q is not eliminated by altering the resource used by the process procedure Q10 depicted in FIG. 20 to a resource used by a process procedure R1 of a workflow R depicted in FIG. 21-4. The processing time of the process procedure R1 is increased, and therefore the workflow R violates a constraint on the workflow completion time.

In this way, the constraint-violation determining unit 213 performs again the determining process for the constraint violation after the alteration-operation receiving unit 216 receives the alteration operation for the workflow definition. When determining there is a workflow that violates a constraint, the constraint-violation determining unit 213 specifies a constraint-violating workflow and a resource-sharing workflow, and the display unit 215 displays again the workflow screen on the monitor.

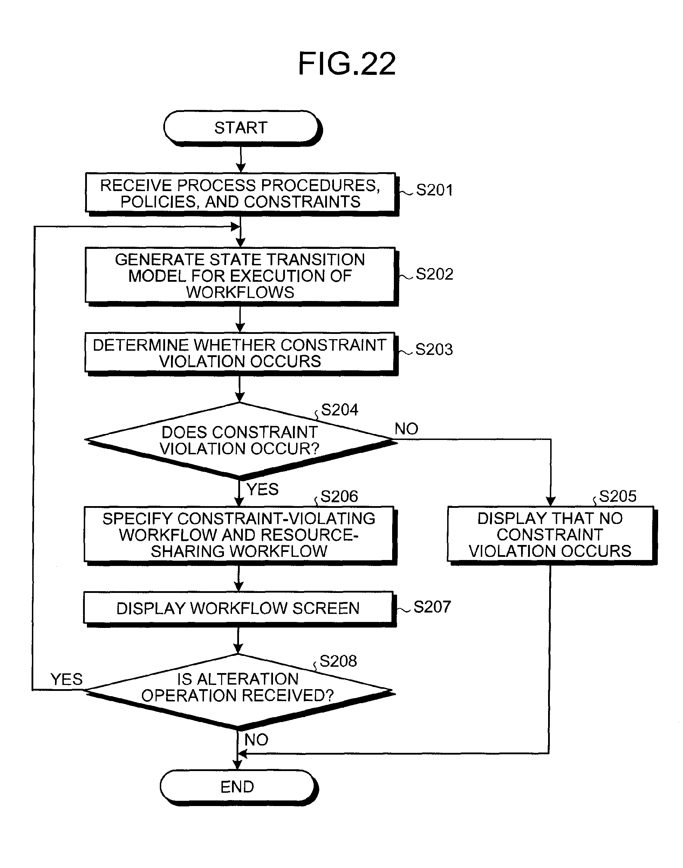

A process procedure performed by the workflow-definition alteration device 20 according to the second embodiment is explained with reference to FIG. 22. FIG. 22 is a flowchart of the process procedure performed by the workflow-definition alteration device 20 according to the second embodiment. The process procedure in which the workflow-definition alteration device 20 determines whether a constraint violation occurs in plural workflows by using a workflow definition inputted by the system administrator, and, when a constraint violation occurs, displays the workflow screen to receive an alteration operation for the workflow definition is explained.

The receiving unit 111 of the workflow-definition alteration device 20 first receives a workflow definition including plural process procedures, plural policies, and plural constraints, generated by the system administrator (Step S201).

The state-transition-model generating unit 212 then generates a state transition model for execution of the workflows by using the process procedures and the policies received by the receiving unit 111 (Step S202).

The constraint-violation determining unit 213 then determines whether a constraint violation occurs when the workflows are executed by using the state transition model generated by the state-transition-model generating unit 212 and the constraints received by the receiving unit 111 (Step S203). When a result of the determination is NO (No at Step S204), the display unit 215 displays a message stating that no constraint violation occurs on the monitor of the workflow-definition alteration device 20 (Step S205), and the process is ended.

Meanwhile, when it is determined that a constraint violation occurs (YES at Step S204), the constraint-violation determining unit 213 specifies a constraint-violating workflow and a resource-sharing workflow (Step S206).

The display unit 215 then displays a workflow screen on which the constraint-violating workflow and the resource-sharing workflow specified by the constraint-violation determining unit 213 are represented with graphics and character strings on the monitor of the workflow-definition alteration device 20 (Step S207).

When receiving an alteration operation for the workflow definition on the workflow screen (YES at Step S208), the alteration-operation receiving unit 216 then inputs an altered workflow definition to the state-transition-model generating unit 212 to generate a state transition model.

The state-transition-model generating unit 212 to which the altered workflow definition is inputted by the alteration-operation receiving unit 216 generates a state transition model for execution of plural altered workflows by using the altered workflow definition (Step S202).

The constraint-violation determining unit 213 then determines whether a constraint violation occurs by using the altered state transition model generated by the state-transition-model generating unit 212 and altered constraints received by the alteration-operation receiving unit 216 at Step S208 (Step S203). When a result of the determination is YES (YES at Step S204), the processes at Steps S206 to S208 are performed.

As described above, the workflow-definition alteration device 20 according to the second embodiment can generate the state transition model for execution of the workflows corresponding to the plural process procedures by using the plural process procedures and the plural policies inputted by the system administrator. The workflow-definition alteration device 20 can determine whether a constraint violation occurs when the plural workflows are executed by using the state transition model and the plural constraints inputted by the system administrator. When it is determined in the determination that a constraint violation occurs, the workflow-definition alteration device 20 can specify the constraint-violating workflow and the resource-sharing workflow, and display the workflow screen. As a result, it is possible to easily recognize a workflow in which the constraint violation occurs and to easily recognize a cause of the constraint violation.

The workflow-definition alteration device 20 can receive an alteration operation for the workflow definition on the workflow screen, and determine whether a constraint violation occurs when the altered workflows are executed by using the state transition model based on the altered workflow definition and the altered constraints. When it is determined in the determination that a constraint violation occurs, the workflow-definition alteration device 20 can specify the constraint-violating workflow and the source-sharing workflow, and display the workflow screen. As a result, the system administrator can easily alter the workflow definition, and easily check whether the altered workflow definition violates the constraints.

Therefore, the workflow-definition alteration device 20 according to the second embodiment can eliminate a constraint violation occurring among the plural workflows before the workflows are executed.

In the second embodiment, the example in which the display unit 215 displays the process procedures P1 and the like in circular shapes is described. However, the process procedures P1 and the like can be displayed by using other graphics such as rectangle and star shapes.

In the second embodiment, the example in which, when it is determined that a constraint violation occurs, the constraint-violation determining unit 213 specifies the constraint-violating workflow and the resource-sharing workflow, and the display unit 215 displays only the constraint-violating workflow and the resource-sharing workflow on the workflow screen is described. However, when it is determined that a constraint violation occurs, the display unit 215 can display all the workflows received by the receiving unit 111 on the workflow screen.

In the second embodiment, the display unit 215 can distinguishably display the constraint-violating workflow and the resource-sharing workflow when it is determined that a constraint violation occurs. For example, the display unit 215 displays the constraint-violating workflow and the resource-sharing workflow in different colors.

In the second embodiment, when it is determined that no constraint violation occurs, the display unit 215 can display a message stating that no constraint violation occurs and also output an audio message stating that no constraint violation occurs. When it is determined that a constraint violation occurs, the display unit 215 can display the workflow screen on the monitor, and also output an audio message stating that a constraint violation occurs.

### INDUSTRIAL APPLICABILITY

As described above, the workflow-definition alteration program, the workflow-definition alteration method, and the workflow-definition alteration device according to the present invention are useful in altering a workflow definition, and particularly suitable for eliminating a constraint violation among plural workflows before the workflows are executed.

## Claims

1. A workflow-definition alteration program for presenting a workflow definition including process procedures related to various proceedings, policies related to rules on allocation of resources to be used when the process procedures are performed, and constraints related to rules to be complied with when the process procedures are performed, the workflow-definition alteration program causing a computer to perform:
a receiving procedure of receiving the process procedures, the policies, and the constraints;
a state-transition-model generating procedure of generating a state transition model for execution of workflows corresponding to the process procedures, by using the process procedures and the policies received in the receiving procedure;
a determining procedure of determining whether a constraint violation occurs when the workflows are executed, by using the state transition model generated in the state-transition-model generating procedure and the constraints received in the receiving procedure;
an altering procedure of altering any one or some of the process procedures, the policies, and the constraints when it is determined in the determining procedure that the constraint violation occurs; and
a presenting procedure of presenting, when alteration is applied in the altering procedure, a workflow definition including the process procedures, the policies, and the constraints applied with the alteration as an alterative workflow definition.

2. The workflow-definition alteration program according to claim 1, wherein
the state-transition-model generating procedure includes generating the state transition model after the alteration by using the process procedures, and the policies applied with the alteration in the altering procedure, and
the determining procedure includes determining whether the constraint violation occurs by using the state transition model after the alteration generated in the state-transition-model generating procedure, and the constraints after the alteration in the altering procedure.

3. The workflow-definition alteration program according to claim 2, further causing the computer to perform a variable-specifying procedure of specifying a variable having different values before and after the alteration of the state transition model, by comparing the state transition model and the state transition model after the alteration generated in the state-transition-model generating procedure.

4. The workflow-definition alteration program according to claim 3, further causing the computer to perform a notifying procedure of notifying that presentation of the alternative workflow definition is impossible when it is determined in the determining procedure that the constraint violation occurs and the number of determinations that the constraint violation occurs reaches a predetermined value.

5. The workflow-definition alteration program according to any one of claims 1 to 4, wherein the presenting procedure further includes presenting details of the constraint violation.

6. A workflow-definition alteration method for presenting a workflow definition including process procedures related to various proceedings, policies related to rules on allocation of resources to be used when the process procedures are performed, and constraints related to rules to be complied with when the process procedures are performed, the workflow-definition alteration method comprising:
a receiving step of receiving the process procedures, the policies, and the constraints;
a state-transition-model generating step of generating a state transition model for execution of workflows corresponding to the process procedures, by using the process procedures and the policies received in the receiving step;
a determining step of determining whether a constraint violation occurs when the workflows are executed, by using the state transition model generated in the state-transition-model generating step and the constraints received in the receiving step;
an altering step of altering any one or some of the process procedures, the policies, and the constraints when it is determined in the determining step that the constraint violation occurs; and
a presenting step of presenting, when alteration is applied in the altering step, a workflow definition including the process procedures, the policies, and the constraints applied with the alteration as an alternative workflow definition.

7. A workflow-definition alteration device for presenting a workflow definition including process procedures related to various proceedings, policies related to rules on allocation of resources to be used when the process procedures are performed, and constraints related to rules to be complied with when the process procedures are performed, the workflow-definition alteration device comprising:
a receiving unit that receives the process procedures, the policies, and the constraints;
a state-transition-model generating unit that generates a state transition model for execution of workflows corresponding to the process procedures, by using the process procedures and the policies received by the receiving unit;
a determining unit that determines whether a constraint violation occurs when the workflows are executed, by using the state transition model generated by the state-transition-model generating unit and the constraints received by the receiving unit;
an altering unit that alters any one or some of the process procedures, the policies, and the constraints when it is determined by the determining unit that the constraint violation occurs; and
a presenting unit that presents, when alteration is applied by the altering unit, a workflow definition including the process procedures, the policies, and the constraints applied with the alteration as an alterative workflow definition.

8. A workflow-definition alteration program for presenting a workflow definition including process procedures related to various proceedings, policies related to rules on allocation of resources to be used when the process procedures are performed, and constraints related to rules to be complied with when the process procedures are performed, the workflow-definition alteration program causing a computer to perform:
a receiving procedure of receiving the process procedures, the policies, and the constraints;
a state-transition-model generating procedure of generating a state transition model for execution of workflows corresponding to the process procedures, by using the process procedures and the policies received in the receiving procedure;
a determining procedure of determining whether a constraint violation occurs when the workflows are executed, by using the state transition model generated in the state-transition-model generating procedure and the constraints received in the receiving procedure; and
a displaying procedure of displaying, when it is determined in the determining procedure that the constraint violation occurs, a workflow screen on which the workflows and the constraint violation are represented with graphics and character strings, on a predetermined display device.

9. The workflow-definition alteration program according to claim 8, wherein the displaying procedure includes displaying a constraint-violating workflow that is determined in the determining procedure to include occurrence of a constraint violation, and a workflow including a process procedure that simultaneously uses a same resource as a process procedure included in the constraint-violating workflow.

10. The workflow-definition alteration program according to claim 8, wherein the displaying procedure includes displaying, when two or more process procedures included in different workflows are performed at a same time, the two or more process procedures with taking one of horizontal and vertical axis directions of the workflow screen as a time axis, to be recognized that the two or more process procedures are performed at the same time.

11. The workflow-definition alteration program according to any one of claims 8 to 10, the displaying procedure includes displaying, when there is a period in which two or more process procedures included in different workflows simultaneously use a same resource, a workflow screen that is configured to enable distinction between the two or more process procedures and remaining process procedures other than the two or more process procedures, on the display device.

12. The workflow-definition alteration program according to claim 11, wherein the displaying procedure includes displaying, when processing times of the two or more process procedures are increased due to the simultaneous use of the same resource by the two or more process procedures, the two or more process procedures by using graphics elongated as compared with the other process procedures.

13. The workflow-definition alteration program according to claim 11, wherein the displaying procedure includes recognizably displaying, when there is a period in which the two or more process procedures simultaneously use the same resource and when until execution of one of the two or more process procedures is finished, execution of the remaining process procedures remains in a wait state in the period, that the remaining process procedures remain in the wait state.

14. The workflow-definition alteration program according to any one of claims 8 to 10, wherein the displaying procedure includes displaying, when it is determined in the determining procedure that a constraint specifying a time when execution of the all process procedures included in the workflow is finished or a time period required to finish the execution of all the process procedures included in the workflow is violated, the time or the time period.

15. The workflow-definition alteration program according to any one of claims 8 to 10, further causing the computer to perform an alteration-operation receiving procedure of receiving an alteration operation for the workflow definition on the workflow screen, wherein
the state-transition-model generating procedure includes generating the state transition model by using the workflow definition applied with alteration received in the alteration-operation receiving procedure.

16. The workflow-definition alteration program according to claim 15, wherein the alteration-operation receiving procedure includes receiving alteration of a constraint specifying a time when execution of all process procedures included in the workflow is finished, or a time period required to finish the execution of all the process procedures included in the workflow.

17. The workflow-definition alteration program according to claim 15, wherein the alteration-operation receiving procedure includes receiving alteration of a constraint specifying an execution order of the process procedures.

18. The workflow-definition alteration program according to claim 15, wherein the alteration-operation receiving procedure includes receiving alteration of a constraint specifying the number of process procedures that can simultaneously use a same resource.

19. A workflow-definition alteration method for presenting a workflow definition including process procedures related to various proceedings, policies related to rules on allocation of resources to be used when the process procedures are performed, and constraints related to rules to be complied with when the process procedures are performed, the workflow-definition alteration method comprising:
a receiving step of receiving the process procedures, the policies, and the constraints;
a state-transition-model generating step of generating a state transition model for execution of workflows corresponding to the process procedures, by using the process procedures and the policies received in the receiving step;
a determining step of determining whether a constraint violation occurs when the workflows are executed, by using the state transition model generated in the state-transition-model generating step and the constraints received in the receiving step; and
a display step of displaying, when it is determined in the determining step that the constraint violation occurs, a workflow screen on which the workflows and the constraint violation are represented with graphics and character strings, on a predetermined display device.

20. A workflow-definition alteration device for presenting a workflow definition including process procedures related to various proceedings, policies related to rules on allocation of resources to be used when the process procedures are performed, and constraints related to rules to be complied with when the process procedures are performed, the workflow-definition alteration device comprising:
a receiving unit that receives the process procedures, the policies, and the constraints;
a state-transition-model generating unit that generates a state transition model for execution of workflows corresponding to the process procedures, by using the process procedures and the policies received by the receiving unit;
a determining unit that determines whether a constraint violation occurs when the workflows are executed, by using the state transition model generated by the state-transition-model generating unit and the constraints received by the receiving unit; and
a displaying unit that displays, when it is determined by the determining unit that the constraint violation occurs, a workflow screen on which the workflows and the constraint violation are represented with graphics and character strings, on a predetermined display device.
